(19) Europäisches Patentamt
European Patent Office
Office européen des brevets

(11) EP 4 693 560 A1

(12) EUROPEAN PATENT APPLICATION
published in accordance with Art. 153(4) EPC

(43) Date of publication:
**11.02.2026 Bulletin 2026/07**

(21) Application number: **24781028.6**

(22) Date of filing: **22.02.2024**

(51) International Patent Classification (IPC):
***H01M 10/0565*** *(2010.01)* ***H01M 4/133*** *(2010.01)*
***H01M 4/134*** *(2010.01)* ***H01M 10/052*** *(2010.01)*

(52) Cooperative Patent Classification (CPC):
**H01M 4/133; H01M 4/134; H01M 10/052; H01M 10/0565;** Y02E 60/10

(86) International application number:
**PCT/KR2024/002357**

(87) International publication number:
**WO 2024/205034 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.03.2023 KR 20230039363**
**13.04.2023 KR 20230048915**

(71) Applicant: **Samsung SDI Co., Ltd.**
**Yongin-si, Gyeongsangnam-do 17084 (KR)**

(72) Inventors:
- **BAE, Woo Jin**
  **Yongin-Si Gyeonggi-do 17084 (KR)**
- **MOON, Jong Seok**
  **Yongin-Si Gyeonggi-do 17084 (KR)**
- **LEE, Kang Hee**
  **Yongin-Si Gyeonggi-do 17084 (KR)**
- **KIM, Hee Min**
  **Yongin-Si Gyeonggi-do 17084 (KR)**
- **PARK, Jong Seok**
  **Yongin-Si Gyeonggi-do 17084 (KR)**
- **WOO, Hyun Sik**
  **Yongin-Si Gyeonggi-do 17084 (KR)**
- **PARK, Jin Hwan**
  **Yongin-Si Gyeonggi-do 17084 (KR)**

(74) Representative: **Michalski Hüttermann & Partner Patentanwälte mbB**
**Kaistraße 16A**
**40221 Düsseldorf (DE)**

# (54) LITHIUM METAL BATTERY AND METHOD FOR PRODUCING SAME

(57) Provided are a lithium metal battery and a method of preparing the same, the lithium metal battery including a cathode, an anode current collector, and a gel-type polymer electrolyte disposed between the cathode and the anode current collector, wherein the gel-type polymer electrolyte includes a crosslinked polymer and a liquid electrolyte containing an organic solvent and a lithium salt, and the crosslinked polymer is a reaction product of a multifunctional crosslinking agent having three or more functional groups and a (meth)acrylate-based compound having a polyethylene glycol moiety.

FIG. 1

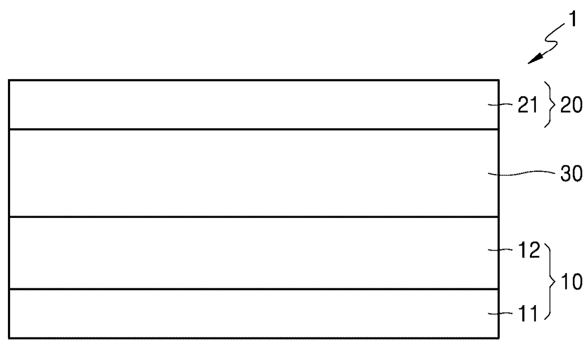




Processed by Luminess, 75001 PARIS (FR)

## Description

### Technical Field

The present disclosure relates to a lithium metal battery and a method of preparing the same.

### Background Art

Currently available lithium metal batteries mainly use carbon-based anode active materials such as graphite. Carbon-based anode active materials do not exhibit volume changes during charging and discharging, thereby enhancing the stability of lithium metal batteries; however, due to their low capacity, anode active materials with higher capacity are required.
Lithium metal, which has a much larger theoretical electric capacity than carbon-based anode materials, may be used as an anode active material.
During charging and discharging, side reactions between the lithium metal and the electrolyte cause dendrites to form on the surface of the lithium metal, and the growth of the dendrites may cause a short circuit between the cathode and the anode, thereby potentially degrading the lifespan characteristics of the lithium metal battery including lithium metal.

### Disclosure

### Technical Problem

An aspect is to provide a lithium metal battery with a novel structure.
Another aspect is to provide a method of preparing the above-described lithium metal battery.

### Technical Solution

According to an embodiment, a lithium metal battery is provided, including a cathode, an anode current collector, and an electrolyte layer disposed between the cathode and the anode current collector, wherein the electrolyte layer includes a gel-type polymer electrolyte, wherein the gel-type polymer electrolyte includes a liquid electrolyte containing an organic solvent and a lithium salt, and a crosslinked polymer, wherein the crosslinked polymer includes a reaction product of a multifunctional crosslinking agent having three or more functional groups and a (meth)acrylate-based compound having a polyethylene glycol moiety.
The electrolyte layer may further include a separator.
Between the electrolyte layer and the anode current collector, an anode active material layer, a protective layer, or a combination thereof may be included.
A lithium metal layer is further included between the electrolyte layer and the anode current collector, and in an XPS analysis of a surface of the lithium metal layer, the intensity of the fluorine peak may be greater than the intensity of the oxygen peak.
A gel-type polymer electrolyte may be present in the pores of the separator.
The mixing weight ratio of the multifunctional crosslinking agent having three or more functional groups and the (meth)acrylate-based compound having a polyethylene glycol moiety is 9:1 to 2:1.
The gel-type polymer electrolyte contains 90 parts to 99 parts by weight of a liquid electrolyte and 1 part to 10 parts by weight of a crosslinked polymer.
In the gel-type polymer electrolyte, the content of the liquid electrolyte is, for example, 92 to 99 parts by weight, 94 to 99 parts by weight, or 95 to 97 parts by weight, and the content of the crosslinked polymer is 1 to 8 parts by weight, 1 to 6 parts by weight, for example, 3 to 5 parts by weight.
The separator includes a porous substrate, and the porous substrate includes polypropylene, polyethylene, or a combination thereof.
According to another aspect, a method of preparing a lithium metal battery is provided, the method including: preparing an anode current collector; preparing an electrolyte layer; preparing a cathode; laminating the anode current collector, the electrolyte layer, and the cathode to prepare an assembly; injecting into the assembly a composition for forming a gel-type polymer electrolyte, wherein the composition includes a multifunctional crosslinking agent having three or more functional groups, a (meth)acrylate-based compound having a polyethylene glycol moiety, and a liquid electrolyte containing an organic solvent and a lithium salt; and crosslinking the injected composition for forming a gel-type polymer electrolyte to prepare a lithium metal battery including the gel-type polymer electrolyte.
An anode active material layer is further laminated on the anode current collector. And the crosslinking is carried out by heat treatment at 40 to 120 °C.

The composition for forming the gel-type polymer electrolyte includes a multifunctional crosslinking agent having three or more functional groups, a (meth)acrylate-based compound having a polyethylene glycol moiety, a lithium salt, an organic solvent, and an initiator.

Advantageous Effects

According to an aspect, a gel-type polymer electrolyte having improved ionic conductivity and enhanced oxidation stability is provided. By using such a gel-type polymer electrolyte, a lithium metal battery with improved high-rate characteristics and lifespan characteristics is provided.

Description of Drawings

FIG. 1 schematically illustrates a stacked structure of a lithium metal battery according to an embodiment.
FIG. 2 schematically illustrates a stacked structure of a lithium metal battery according to another embodiment.
FIG. 3 is a schematic diagram of a lithium metal battery according to an embodiment.
FIG. 4 is a schematic diagram of a lithium metal battery according to another embodiment.
FIG. 5 is a schematic diagram of a lithium metal battery according to another embodiment.

<Description of Major Reference Numerals in the Drawings>

1: Lithium metal battery 2, 20: Anode
3, 10: Cathode 4: Separator
5: Battery case 6: Cap assembly
7: Battery structure 8: Electrode tab

Mode for Invention

The present inventive concept described below may undergo various modifications and may have various embodiments, and specific embodiments are illustrated in the drawings and described in detail. However, this is not intended to limit the present inventive concept to a specific embodiment, but should be understood to include all modifications, equivalents or alternatives that fall within the technical scope of the present inventive concept.

The terms used below are used only to describe specific embodiments and are not intended to limit the present inventive concept. Singular expressions include plural expressions unless the context clearly indicates otherwise. Hereinafter, the terms "comprise" or "have" and the like are to be understood as indicating the presence of the features, numerals, processes, operations, elements, components, constituents, materials, or combinations thereof described in the specification, and are not to be interpreted as precluding the possibility of the presence or addition of one or more other features, numerals, processes, operations, elements, components, constituents, materials, or combinations thereof. The symbol ""/" used herein may be interpreted as "and" or "or" depending on the context.

In the drawings, the thicknesses of various layers and regions may be exaggerated or reduced for clarity. Throughout the specification, like reference numerals refer to like elements. Throughout the specification, when a part such as a layer, film, region, or plate is described as being "on" or "above" another part, it includes not only a case where it is directly on the other part, but also a case where another part is interposed therebetween. Throughout the specification, terms such as "first" and "second" may be used to describe various elements, but the elements should not be limited by such terms. These terms are only used to distinguish one element from another. In the present specification and drawings, for components having substantially the same function and structure, the same reference numerals are used and redundant descriptions are omitted.

As used herein, the term "particle diameter" of a particle refers to the average diameter in the case of a spherical particle, and refers to the average long-axis length in the case of a non-spherical particle. The particle diameter may be measured using a particle size analyzer (PSA). The "particle diameter" of a particle is, for example, an average particle diameter. The average particle diameter is, for example, the median particle diameter (D50). The median particle diameter (D50) is the particle size corresponding to 50 % cumulative volume, calculated from the side of the particle size distribution with smaller particle sizes, for example as measured by a laser diffraction method. When measuring particle size using a scanning electron microscope, it is determined as the average value of 30 or more randomly selected particles of 1 μm or larger, excluding fine particles.

As used herein, the term "metal" includes both metals and metalloids such as silicon and germanium, in either an elemental or ionic state.

As used herein, the term "alloy" refers to a mixture of two or more metals.

As used herein, the term "cathode active material" refers to a cathode material capable of undergoing lithiation and delithiation, and the term "anode active material" refers to an anode material capable of undergoing lithiation and delithiation.

As used herein, the terms "lithiation" and "to lithiate" refer to the process of adding lithium to a cathode active material or anode active material, and the terms "delithiation" and "to delithiate" refer to the process of removing lithium from a cathode active material or anode active material.

As used herein, the terms "charging" and "to charge" refer to the process of supplying electrochemical energy to a battery, and the terms "discharging" and "to discharge" refer to the process of removing electrochemical energy from a battery.

As used herein, the terms "positive electrode" and "cathode" refer to the electrode at which electrochemical reduction and lithiation occur during discharge, and the terms "negative electrode" and "anode" refer to the electrode at which electrochemical oxidation and delithiation occur during discharge.

Hereinafter, a lithium metal battery and a method of preparing the same according to an embodiment will be described in more detail.

An anode-free lithium metal battery is a battery that uses only an anode current collector without an anode active material layer. During charging, lithium ions delivered from the cathode are plated on the surface of the anode current collector, and during discharging, the lithium plated on the anode current collector is again stripped and inserted into the cathode, thereby operating the battery.

Since the anode-free lithium metal battery omits lithium metal that would otherwise be used as the anode active material, it has the advantage of maximizing the energy density per volume and weight of the battery. However, lithium metal plated during operation may grow into lithium dendrites due to non-uniform current concentration during oxidation/reduction processes, and the lithium dendrites may cause loss of the lithium anode, thereby deteriorating the capacity and lifespan characteristics of the battery, and may further cause a short circuit between the anode and the cathode, leading to safety issues.

In order to solve the above-mentioned problems, methods have been proposed in which a protective layer is introduced to minimize contact between lithium and the electrolyte to reduce side reactions, or in which a liquid electrolyte is introduced into a crosslinked polymer network to minimize electrolyte exposure on the electrode surface and to form a uniform lithium ion flow throughout the electrode, thereby suppressing the growth of lithium dendrites by using a gel-type polymer electrolyte.

The gel-type polymer electrolytes known so far have a semi-solid form compared to pure liquid electrolytes and exhibit improved safety, but have high resistance and tend to decompose at high voltage, making them difficult to use at high voltage. In addition, conventional gel-type polymer electrolytes mainly use non-ionically conductive crosslinking agents, and therefore have insufficient ionic conductivity, necessitating improvement.

A lithium metal battery according to an embodiment includes a cathode; an anode current collector; and an electrolyte layer disposed between the cathode and the anode current collector, wherein the electrolyte layer includes a gel-type polymer electrolyte, and the gel-type polymer electrolyte includes a liquid electrolyte containing an organic solvent and a lithium salt and a crosslinked polymer, and the crosslinked polymer includes a reaction product of a multifunctional crosslinking agent having three or more functional groups and a (meth)acrylate-based compound having a polyethylene glycol moiety. As used herein, the reaction product of a multifunctional crosslinking agent having three or more functional groups and a (meth)acrylate-based compound having a polyethylene glycol moiety refers to a crosslinked product of a multifunctional crosslinking agent having three or more functional groups and a (meth)acrylate-based compound having a polyethylene glycol moiety.

An anode active material layer, a protective layer, or a combination thereof may be included between the anode current collector and the electrolyte layer.

A separator may further be included between the anode current collector and the electrolyte layer.

The separator includes a porous substrate. When the lithium metal battery contains a separator, the anode active material layer, the protective layer, or a combination thereof may be disposed between the anode current collector and the separator. As such, the battery may include an anode active material layer and/or a protective layer disposed between the anode current collector and the separator, or may be free of the anode active material layer or protective layer.

According to an embodiment, a lithium metal battery includes: an anode current collector; an electrolyte layer (separator) disposed on the anode current collector; a gel-type polymer electrolyte disposed on the electrolyte layer (separator); and a cathode disposed on the gel-type polymer electrolyte, wherein the gel-type polymer electrolyte includes a liquid electrolyte containing an organic solvent and a lithium salt and a crosslinked polymer, and the crosslinked polymer may include a reaction product of a multifunctional crosslinking agent having three or more functional groups and a (meth) acrylate-based compound having a polyethylene glycol moiety.

The gel-type polymer electrolyte may be present in the pores or inside of the separator.

The crosslinking agent having three or more functional groups refers to a multifunctional crosslinking agent having three or more crosslinkable functional groups. A material that is electrochemically stable, for example, at a voltage of about 4.3 V or higher under the driving conditions of a cathode using a cathode active material containing 90 mol% or more of nickel, is used. The number of crosslinkable functional groups is, for example, 3 to 10, or 3 to 6. Examples of such crosslinking agents include trimethylolpropane triacrylate, trimethylolpropane trimethacrylate, trimethylolpropane ethoxylate triacrylate, trimethylolpropane propoxylate triacrylate, ditrimethylolpropane tetraacrylate, pentaerythritol triacrylate, pentaerythritol tetraacrylate, pentaerythritol ethoxylate tetraacrylate, dipentaerythritol pentaacrylate, dipentaerythritol hexaacrylate (DPHA), tris(2-hydroxyethyl)isocyanurate triacrylate (THEICTA), propoxylated glyceryl triacrylate, or a combination thereof.

The (meth)acrylate-based compound having a polyethylene glycol moiety is a compound that reacts with the multifunctional crosslinking agent having three or more functional groups, and has two or more functional groups capable of participating in the crosslinking reaction. When a crosslinking reaction is carried out using such a compound, the degree of crosslinking increases, decomposition at high voltage is suppressed, oxidative stability is improved, and a gel-type polymer electrolyte with improved ionic conductivity at high voltage may be obtained.

The (meth)acrylate-based compound having a polyethylene glycol moiety contains an ethylene glycol moiety that imparts ionic conductivity, and therefore the gel-type polymer electrolyte formed therefrom may exhibit improved ionic conductivity. Examples of the (meth)acrylate-based compound having a polyethylene glycol moiety include polyethylene glycol diacrylate, polyethylene glycol dimethacrylate, triethylene glycol diacrylate (TEGDA), triethylene glycol dimethacrylate (TEGDMA), tetraethylene glycol diacrylate (TTEGDA), glycidyl methacrylate, polyethylene glycol diacrylate (PEGDA), polyethylene glycol dimethacrylate (PEGDMA), polypropylene glycol diacrylate (PPGDA), dipropylene glycol diacrylate (DPGDA), tripropylene glycol diacrylate (TPGDA), trimethylolpropane trimethacrylate (TMPTMA), or a combination thereof.

The mixing weight ratio of the multifunctional crosslinking agent having three or more functional groups to the (meth)acrylate-based compound having a polyethylene glycol moiety is 9:1 to 2:1, 9:1 to 2.5:1, 9:1 to 2.3:1, 9:1 to 3:1, or 6:1 to 4:1. When the mixing weight ratio is within the above range, a gel-type polymer electrolyte may be obtained with increased degree of crosslinking, improved oxidative stability, and enhanced ionic conductivity.

In the gel-type polymer electrolyte, the content of the liquid electrolyte is 90 to 99 parts by weight, 92 to 98 parts by weight, 93 to 97 parts by weight, or, for example, 95 to 97 parts by weight, and the content of the crosslinked polymer is 1 to 10 parts by weight, 1 to 8 parts by weight, 2 to 7 parts by weight, or, for example, 3 to 5 parts by weight. When the contents of the liquid electrolyte and the crosslinked polymer in the gel-type polymer electrolyte are within the above range, the ionic conductivity is improved.

The ionic conductivity of the gel-type polymer electrolyte is 0.19 S/cm or more, or 0.19 S/cm to 0.5 S/cm. A lithium metal battery including a gel-type polymer electrolyte having such ionic conductivity may exhibit improved high-rate characteristics and power output characteristics.

A gel-type polymer electrolyte containing a liquid electrolyte and a **crosslinked** polymer is contained in the pores of a porous substrate constituting the separator. In a separator having such a structure, the liquid electrolyte is retained within the crosslinked polymer network having a crosslinked structure, and is prevented from leaking out.

Referring to FIG. 1, an electrolyte layer 30 and a cathode 10 are laminated on an anode current collector 21. The anode 20 includes the anode current collector 21, and the anode active material layer is absent. The electrolyte layer 30 may include a separator.

The cathode 10 includes a cathode active material layer 12 and a cathode current collector 11.

The electrolyte layer 30 may include a gel-type polymer electrolyte.

When the electrolyte layer includes a separator, the gel-type polymer electrolyte may be structured to be disposed between the separator and the cathode. According to another embodiment, the gel-type polymer electrolyte may not be present between the separator and the cathode, and the gel-type polymer electrolyte may exist only inside the separator. Here, the inside of the separator may refer to pores. According to another embodiment, the gel-type polymer electrolyte may be present on at least one surface of the separator, for example, on both surfaces of the separator. Alternatively, a gel-type polymer electrolyte may be present between the anode current collector and the separator. When an anode active material layer such as a lithium metal layer is present on the anode current collector, the gel-type polymer electrolyte may also be present between the anode active material layer and the separator.

The separator may include a porous substrate. The pores of the separator may contain a gel-type polymer electrolyte including a liquid electrolyte and a crosslinked polymer.

The pore diameter of the separator is generally 0.01 to 10 μm, and the thickness is 5 to 20 μm. As such a separator, for example, an olefin-based polymer such as polypropylene; or sheets or nonwoven fabrics made of glass fiber or polyethylene are used. When a solid polymer electrolyte is used as an electrolyte, the solid polymer electrolyte may also serve as a separator.

Among the separators, specific examples of the olefin-based polymer include polyethylene, polypropylene, or

multilayer films including two or more layers thereof. Mixed multilayer films such as a polyethylene/polypropylene two-layer separator, a polyethylene/polypropylene/polyethylene three-layer separator, and a polypropylene/polyethylene/-polypropylene three-layer separator may be used.

In the lithium metal battery according to an embodiment, the liquid electrolyte is absorbed into the polymer matrix of the gel-type polymer electrolyte, so that leakage does not occur. Electrochemical side reactions and electrolyte decomposition reactions occurring at the cathode and anode are suppressed, thereby ensuring stability and improving battery performance.

The gel-type polymer electrolyte contains a liquid electrolyte, and the liquid electrolyte includes a lithium salt and an organic solvent.

The lithium salt includes a first lithium salt and a second lithium salt. By including the first lithium salt and the second lithium salt in the gel-type polymer electrolyte, the ionic conductivity of the gel-type polymer electrolyte may be improved.

The first lithium salt and the second lithium salt are borate-based lithium salts. Borate-based lithium salts have better high-temperature stability compared to phosphorus-based lithium salts and may suppress the generation of hydrofluoric acid (HF). By including borate-based lithium salts as the first and second lithium salts, the high-temperature cycle characteristics of the lithium battery may be improved.

The first lithium salt and the second lithium salt may, for example, independently be fluorine-containing borate-based lithium salts. By including fluorine-containing borate-based lithium salts as the first lithium salt and the second lithium salt, the composition of the SEI layer formed during charging and discharging of the lithium battery may be more effectively modified. For example, as the fluorine (F) content in the SEI layer increases, the structural stability of the SEI layer increases, and side reactions with the organic solvent may be effectively suppressed. As a result, the reversibility of the electrode reaction of the lithium battery may be improved.

The first lithium salt and the second lithium salt may, for example, be a non-cyclic borate lithium salt and a cyclic borate lithium salt, respectively. By including a non-cyclic lithium salt as the first lithium salt, the ionic conductivity of the gel-type polymer electrolyte may be more effectively increased. By including a cyclic lithium salt as the second lithium salt, aggregation of anions may increase, which may more effectively contribute to the modification of the SEI layer composition and improve the high-temperature stability of the gel-type polymer electrolyte.

By not including the first lithium salt, the ionic conductivity of the gel-type polymer electrolyte may be reduced. By not including a second lithium salt, the structural stability of the SEI layer may be reduced.

The fluorine-containing borate-based lithium salt may include, for example, $LiBF_4$, $LiBF_3(C_2F_5)$, a compound represented by any one of Formulae 1 to 12, or a combination thereof.

<Formula 1> <Formula 2>

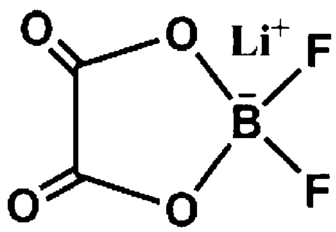 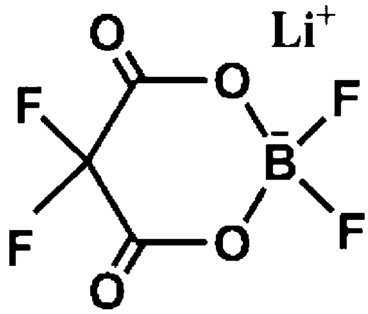

<Formula 3> <Formula 4>

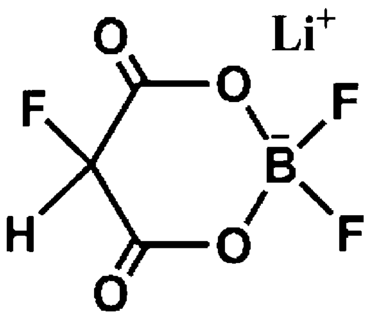 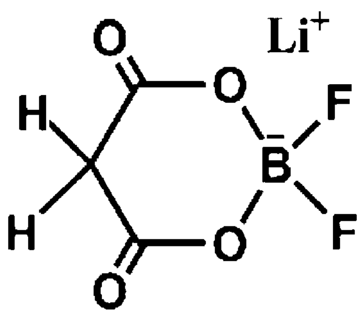

<Formula 5> <Formula 6>

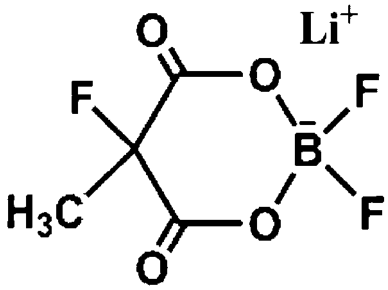

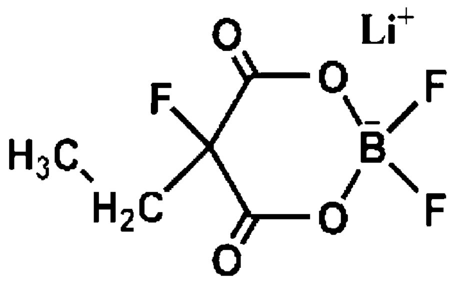

<Formula 7> <Formula 8>

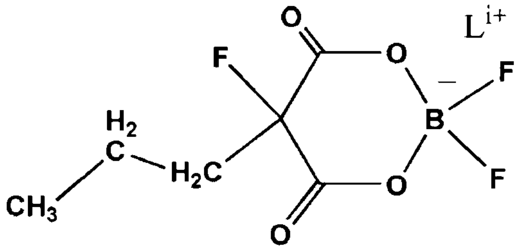

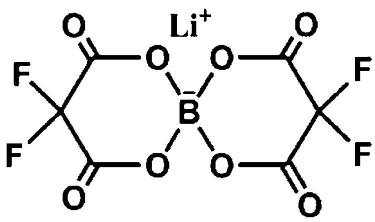

<Formula 9> <Formula 10>

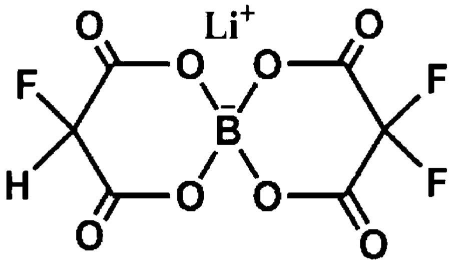

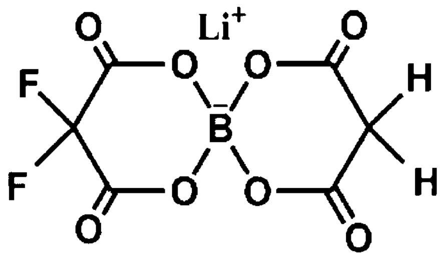

<Formula 11> <Formula 12>

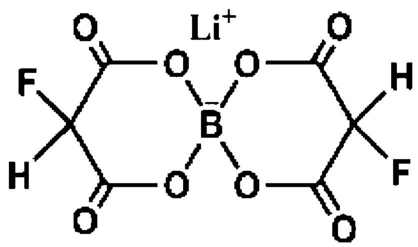

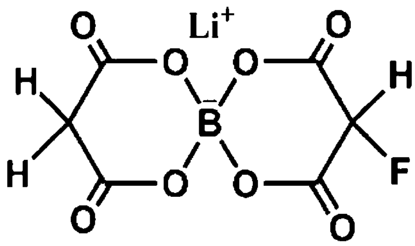

The first lithium salt may include, for example, $LiBF_4$, and the second lithium salt may include a compound selected from compounds represented by Formulae 1 to 12.

The first lithium salt may include $LiBF_4$, and the second lithium salt may include, for example, a compound of Formula 1.

The gel-type polymer electrolyte may, for example, not include a phosphorus-based lithium salt. By not including a phosphorus-based lithium salt, the gel-type polymer electrolyte may exhibit improved high-temperature stability and may suppress the generation of hydrofluoric acid (HF).

The gel-type polymer electrolyte may, for example, not include LiBOB. By not including LiBOB, the ionic conductivity of the gel-type polymer electrolyte may be further improved, and the solubility of the lithium salt in a carbonate-based solvent may be enhanced.

The content of the first lithium salt and the second lithium salt in the gel-type polymer electrolyte may be, for

example, independently greater than 0 and not more than 1.2 M, 0.1 M to 1.0 M, or 0.4 M to 0.8 M. By having the first lithium salt and the second lithium salt each in these content ranges, the gel-type polymer electrolyte may simultaneously provide excellent ionic conductivity and formation of a structurally stable SEI layer.

The content of the first lithium salt and the second lithium salt may be, for example, independently greater than 0 and not more than 1.2 M, 0.1 M to 1.0 M, or 0.4 M to 0.8 M, with respect to the precursor composition for forming the gel-type polymer electrolyte before the addition of the first crosslinking monomer and thermal initiator.

The content ratio of the first lithium salt to the second lithium salt may be, for example, from 1:9 to 9:1, from 3:7 to 7:3, or from 4:6 to 6:4. By having the first lithium salt and the second lithium salt in these content ratios, the gel-type polymer electrolyte may simultaneously provide excellent ionic conductivity and formation of a structurally stable SEI layer. The content ratio of the first lithium salt and the second lithium salt may be, for example, a molar ratio.

The gel-type polymer electrolyte includes a first organic solvent and a second organic solvent. By including the first organic solvent and the second organic solvent in the gel-type polymer electrolyte, the interfacial resistance between the gel-type polymer electrolyte and the cathode and/or the interfacial resistance between the gel-type polymer electrolyte and the lithium metal layer plated during charging may be more effectively reduced. The first organic solvent and the second organic solvent include, for example, carbonate-based compounds. The first organic solvent and the second organic solvent are, for example, carbonate-based organic solvents. By including carbonate-based first and second organic solvents in the gel-type polymer electrolyte, the first lithium salt and the second lithium salt may be easily dissolved in the organic solvents, and the viscosity of the precursor composition for forming the gel electrolyte may be reduced. The first organic solvent includes, for example, a linear carbonate compound. By using a linear carbonate-based solvent as the first organic solvent, the viscosity of the precursor composition before crosslinking may be lowered. The handling of the precursor composition may be easier. The second organic solvent includes, for example, a cyclic carbonate compound substituted with a substituent. The substituent of the cyclic carbonate compound includes, for example, a halogen, a cyano group (CN), a nitro group ($NO_2$), or combinations thereof. By using a cyclic carbonate-based solvent substituted with a substituent as the second organic solvent, the first lithium salt and the second lithium salt may be more easily dissolved in the precursor composition for forming the gel electrolyte, and the substituent may participate in the formation of the SEI layer, thereby improving the structural stability of the SEI layer. The first organic solvent may include, for example, diethyl carbonate (DEC), dimethyl carbonate (DMC), ethyl methyl carbonate (EMC), methyl propyl carbonate, ethyl propyl carbonate, dipropyl carbonate or combinations thereof. The second organic solvent may include, for example, vinylene carbonate substituted with one or more substituents selected from a halogen, a cyano group (CN), and a nitro group ($NO_2$); vinylethylene carbonate substituted with one or more substituents selected from a halogen, a cyano group (CN), and a nitro group ($NO_2$); fluoroethylene carbonate (FEC); fluoroethylene carbonate substituted with one or more substituents selected from a halogen, a cyano group (CN), and a nitro group ($NO_2$); or a combination thereof. The first organic solvent may include, for example, diethyl carbonate, and the second organic solvent may include, for example, a fluorine-substituted cyclic carbonate compound. The second organic solvent may include, for example, fluoroethylene carbonate. The gel polymer electrolyte may, for example, not include an unsubstituted cyclic carbonate-based solvent. By not including an unsubstituted cyclic carbonate solvent, the first lithium salt and the second lithium salt may be more easily dissolved in the precursor composition for forming the gel polymer. The volume ratio of the first organic solvent to the second organic solvent may be, for example, from 5.5:4.5 to 9:1, from 6:4 to 9:1, from 6:4 to 8:2, or from 6:4 to 7:3. By having the volume ratio of the first organic solvent to the second organic solvent within such a range, a composition for forming a gel electrolyte with excellent lithium salt solubility and low viscosity may be provided. A gel-type polymer electrolyte obtained from the composition for forming a gel electrolyte having excellent lithium salt solubility and low viscosity may provide excellent mechanical properties and improved ionic conductivity.

The lithium salt may be, for example, one or more selected from LiSCN, $LiN(CN)_2$, $LiClO_4$, $LiBF_4$, $LiAsF_6$, $LiPF_6$, $LiCF_3SO_3$, $LiC(CF_3SO_2)_3$, $LiC(FSO_2)_3$, $LiN(SO_2C_2F_5)_2$, $LiN(SO_2CF_3)_2$, $LiN(SO_2F)_2$, $LiSbF_6$, $LiPF_3(CF_2CF_3)_3$, $LiPF_3(CF_3)_3$, and $LiB(C_2O_4)_2$.

The concentration of the lithium salt in the liquid electrolyte may be, for example, from 1 to 5 M, or from 1 to 2.5 M. Within this range, a sufficient amount of lithium ions required for charging and discharging a lithium metal battery may be generated.

As the organic solvent, for example, aprotic organic solvents such as N-methyl-2-pyrrolidone, propylene carbonate, ethylene carbonate, butylene carbonate, dimethyl carbonate, diethyl carbonate, gamma-butyrolactone, 1,2-dimethoxyethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphate triesters, trimethoxymethane, dioxolane derivatives, sulfolane, methyl sulfolane, 1,3-dimethyl-2-imidazolidinone, propylene carbonate derivatives, tetrahydrofuran derivatives, ethers, methyl propionate, and ethyl propionate may be used. Among them, carbonate-based solvents such as propylene carbonate, ethylene carbonate, butylene carbonate, dimethyl carbonate, and diethyl carbonate may be used.

According to an embodiment, when the gel-type polymer electrolyte is present in the pores of the porous substrate, interfacial resistance between the cathode, anode, and separator may be minimized, and the movement of

lithium may be facilitated.

As shown in FIG. 2, an anode active material layer 22 may be disposed between the anode current collector 21 and the electrolyte layer 30.

The anode active material layer 22 may be formed by plating of lithium metal during charging. As such, the anode active material layer 22 may be a plated lithium layer. The plated lithium layer is a lithium metal layer.

The lithium metal layer functions, for example, as a lithium reservoir. The lithium alloy may include, for example, Li-Al alloy, Li-Sn alloy, Li-In alloy, Li-Ag alloy, Li-Au alloy, Li-Zn alloy, Li-Ge alloy, Li-Si alloy, and the like, but is not limited thereto, and any alloy known to be used as a lithium alloy in the relevant technical field may be used. The lithium metal layer may be formed of lithium, one of the above alloys, or a combination of multiple alloys. The lithium metal layer is, for example, a plated layer. The lithium metal layer may be plated between the electrolyte layer 30 and the anode current collector 21 during the charging process of the lithium metal battery 1.

The lithium metal layer is a metal layer containing lithium or a lithium alloy. The lithium metal layer includes lithium or a lithium alloy. The lithium metal layer may function, for example, as a lithium reservoir. The lithium alloy may include, for example, a Li-Al alloy, a Li-Sn alloy, a Li-In alloy, a Li-Ag alloy, a Li-Au alloy, a Li-Zn alloy, a Li-Ge alloy, a Li-Si alloy, etc., but is not limited thereo, and any lithium alloy used as a lithium alloy in the relevant technical field may be used. The lithium metal layer may be composed of one of these alloys or of lithium, or may be composed of a combination of several types of alloys. The lithium metal layer may be, for example, a plated layer. The lithium metal layer is plated, for example, between the electrolyte layer 30 and the anode current collector 21 during the charging process of the lithium metal battery 1.

The thickness of the lithium metal layer is not particularly limited, but is, for example, 1 to 200 μm, 1 to 150 μm, 1 to 100 μm, 1 to 50 μm, 1 to 30 μm, 1 to 22 μm or 1 to 10 μm. If the thickness of the lithium metal layer is too thin, it is difficult for the lithium metal layer to perform the role of a lithium reservoir. If the thickness of the lithium metal layer is excessively thick, the volume of the lithium metal battery 1 may increase excessively, and the cycle characteristics of the lithium metal battery 1 may be rather deteriorated.

The thickness of the lithium metal layer may be smaller than the thickness of the cathode active material layer 12. For example, the thickness of the lithium metal layer may be 70% or less, 60% or less, 50% or less, 40% or less, or 30% or less of the thickness of the cathode active material layer 12. The thickness of the lithium metal layer may be, for example, 1 to 70 %, 1 to 60 %, 1 to 50 %, 1 to 40 %, or 1 to 30 % of the thickness of the cathode active material layer 12. By making the thickness of the lithium metal layer smaller than that of the cathode active material layer, volume changes during charging and discharging of the lithium battery 1 can be suppressed. As a result, degradation due to volume change of the lithium metal battery 1 may be suppressed.

The gel-type polymer electrolyte may effectively prevent degradation of the lithium battery by suppressing side reactions with the lithium metal layer during charging and discharging of the lithium battery. For example, an SEI (Solid Electrolyte Interphase) layer may be formed between the gel-type polymer electrolyte and the plated lithium metal layer during charging and discharging of the lithium metal battery. By modifying the SEI layer to have an increased content of lithium salt decomposition products, side reactions between the gel-type polymer electrolyte and the lithium metal layer may be more effectively suppressed. In addition, the gel-type polymer electrolyte and/or the modified SEI layer may more effectively suppress the growth of lithium dendrites from the lithium metal layer, thereby effectively preventing internal short-circuiting of the lithium battery.

The separator is disposed on the anode current collector, and a lithium metal layer is further included between the anode current collector and the separator. In (X-ray Photoelectron Spectroscopy (XPS) analysis of the surface of the lithium metal layer, the peak intensity derived from the fluorine (F) element may be greater than the peak intensity derived from the oxygen (O) element, for example. In the XPS analysis of the surface of the lithium metal layer, the peak intensity derived from the fluorine (F) element may be greater than 100 %, 105 % or more, 110 % or more, or 120 % or more of the peak intensity derived from the oxygen (O) element. In the XPS analysis of the surface of the lithium metal layer, the peak intensity derived from the fluorine (F) element may be, for example, greater than 100 % and up to 200%, 105 % to 200 %, 110 % to 200 %, or 120 % to 200 % of the peak intensity derived from the oxygen (O) element. When the SEI layer formed on the surface of the lithium metal layer mainly includes an inorganic compound containing fluorine (F), the structural stability of the SEI layer may be improved. As a result, the cycle characteristics of the lithium metal battery 1 may be improved. In contrast, when the SEI layer formed on the surface of the lithium metal layer mainly includes an organic compound containing oxygen (O), the structural stability of the SEI layer may deteriorate. The peak derived from the fluorine (F) element may be, for example, a peak derived from the fluorine (F) 1s orbital. The peak derived from the oxygen (O) element may be, for example, a peak derived from the oxygen (O) 1s orbital.

After assembly of the lithium metal battery 1, a lithium metal layer is plated by charging, and since the lithium metal layer is not included at the time of assembly of the lithium metal battery 1, the energy density of the lithium metal battery 1 increases. When the lithium metal layer is additionally disposed by charging after assembly of the lithium metal battery 1, the region between the anode 20, that is, the anode current collector 21 and the electrolyte layer 30, is a Li-free region that does not contain lithium (Li), for example, in the initial state or in the fully discharged state of the lithium metal battery 1.

Alternatively, the anode active material layer 22 may be disposed at the time of assembling the lithium metal battery. The thickness of the anode active material layer is 1 to 500 μm, 3 to 500 μm, 5 to 500 μm, or 10 to 500 μm. When the thickness of the anode active material layer is within the above range, a lithium metal battery with improved cycle characteristics may be produced without a decrease in energy density.

Instead of the anode active material layer, a protective layer may be formed. The thickness of the protective layer is 1 μm to 20 μm. The protective layer may include, for example, a polymer such as polyvinyl alcohol, polyimide, vinylidene fluoride-hexafluoropropylene copolymer, polyvinylidene fluoride, carboxymethyl cellulose, or styrene-butadiene rubber, or a polymer containing an inorganic filler. The inorganic filler may include, for example, $SiO_2$, $Al_2O_3$, $Al(OH)_3$, AlO(OH), $TiO_2$, $BaTiO_3$, $ZnO_2$, $Mg(OH)_2$, aluminum Nitride (AlN), silicon carbide (SiC), boron Nitride (BoN) or a combination thereof. By additionally introducing such a protective layer, contact between lithium and the electrolyte may be minimized to reduce side reactions, and a uniform lithium ion flow throughout the electrode may be formed to suppress the growth of lithium dendrites.

The anode active material layer 22 includes lithium metal or a lithium alloy.. Alternatively, when the anode active material layer is disposed at the time of battery assembly, the anode active material layer may include carbon-based material alone, or a combination of carbon-based material and one or more selected from metals and metalloids.

The carbon-based material includes amorphous carbon, and the average particle diameter of the amorphous carbon is 10 nm to 100 nm. The carbon-based material may include, for example, carbon black (CB), acetylene black (AB), furnace black (FB), ketjen black (KB), graphene, or a combination thereof.

According to an embodiment, the anode active material layer may include lithium foil, lithium powder, or a combination thereof.

The lithium foil may include, for example, lithium metal foil, lithium alloy foil, or a combination thereof. The lithium powder may include lithium metal powder, lithium alloy powder, or a combination thereof. The lithium alloy is an alloy of lithium and another metal capable of forming an alloy with lithium, and the lithium alloy contains lithium and a first metal. The first metal may be indium (In), silicon (Si), gallium (Ga), tin (Sn), aluminum (Al), titanium (Ti), zirconium (Zr), niobium (Nb), germanium (Ge), antimony (Sb), bismuth (Bi), gold (Au), platinum (Pt), palladium (Pd), magnesium (Mg), silver (Ag), zinc (Zn), nickel, iron, cobalt, chromium, cesium, sodium, potassium, calcium, yttrium, bismuth, tantalum, hafnium, barium, vanadium, strontium, lanthanum, or a combination thereof.

The lithium alloy may include, for example, a lithium-silver alloy, lithium-zinc alloy, lithium-magnesium alloy, or lithium-tin alloy. An anode active material layer including lithium metal foil may be, for example, a lithium metal layer. An anode active material layer including lithium alloy foil may be, for example, a lithium alloy layer. An anode active material layer including lithium metal powder and/or lithium alloy powder may be introduced by coating a slurry containing lithium powder and a binder on the anode current collector. The binder may be, for example, a fluorine-based binder such as polyvinylidene fluoride (PVDF). The anode active material layer may not include a carbon-based anode active material. Accordingly, the anode active material layer may be composed of a metal-based anode active material.

The anode current collector is composed of a material that does not react with lithium, that is, a material that does not form either an alloy or a compound with lithium. The material constituting the anode current collector may be, for example, copper (Cu), stainless steel, titanium (Ti), iron (Fe), cobalt (Co), and nickel (Ni), but is not limited thereto, and any material known to be used as an electrode current collector in the relevant technical field may be used. The anode current collector may be composed of one of the above-mentioned metals, or an alloy or coating material of two or more of the metals. The anode current collector is, for example, in a form of a plate or foil.

The anode active material layer may include an anode active material and a binder.

The anode active material is, for example, in a form of a particle. The average particle diameter of the anode active material in particle form may be, for example, 10 nm to 4 μm, 10 nm to 3 μm, 10 nm to 2 μm, 10 nm to 1 μm, 10 nm to 500 nm, 10 nm to 300 nm, 10 nm to 100 nm, or 20 nm to 80 nm. Since the anode active material has an average particle diameter in such a range, the reversible plating and/or dissolution of lithium during charge and discharge may be more facilitated. The average particle diameter of the anode active material is, for example, a median diameter (D50) measured using a laser particle size distribution analyzer.

The anode active material may include, for example, at least one selected from carbon-based anode active materials and metal or semimetal anode active materials. The carbon-based anode active material may be, for example, amorphous carbon. The carbon-based anode active material may include, for example, carbon black (CB), acetylene black (AB), furnace black (FB), ketjen black (KB), graphene, or combinations thereof, but is not necessarily limited thereto, and any material classified as amorphous carbon in the relevant technical field may be used. Amorphous carbon refers to carbon that is non-crystalline or has very low crystallinity and is distinguished from crystalline carbon or graphite-based carbon. The metal or metalloid anode active material includes at least one selected from the group consisting of gold (Au), platinum (Pt), palladium (Pd), silicon (Si), silver (Ag), aluminum (Al), bismuth (Bi), tin (Sn), and zinc (Zn), but is not necessarily limited thereto, and any metal or metalloid anode active material that forms an alloy or compound with lithium in the relevant technical field may be used. For example, since nickel (Ni) does not form an alloy with lithium, it is not considered a metal anode active material in this specification. The anode active material layer includes one type of anode

active material among the above anode active materials, or includes a mixture of two or more different anode active materials. The anode active material layer may include, for example, a mixture of amorphous carbon and at least one selected from the group consisting of gold (Au), platinum (Pt), palladium (Pd), silicon (Si), silver (Ag), aluminum (Al), bismuth (Bi), tin (Sn), and zinc (Zn). The mixing ratio of the mixture may be, for example, from 10:1 to 1:2, 10:1 to 1:1, 7:1 to 1:1, 5:1 to 1:1, or 4:1 to 2:1 in weight ratio. The anode active material included in the anode active material layer may include, for example, a mixture of first particles composed of amorphous carbon and second particles composed of a metal or metalloid. The metal includes, for example, gold (Au), platinum (Pt), palladium (Pd), silicon (Si), silver (Ag), aluminum (Al), bismuth (Bi), tin (Sn), and zinc (Zn). The content of the second particles may be, based on the total weight of the mixture, 8 to 60 wt%, 10 to 50 wt%, 15 to 50 wt%, 15 to 40 wt%, 20 to 40 wt%, or 20 to 30 wt%. By having the content of the second particles within such a range, for example, the cycle characteristics of the lithium metal battery may be further improved.

The binder included in the anode active material layer may be, for example, styrene-butadiene rubber (SBR), polytetrafluoroethylene, polyvinylidene fluoride, polyethylene, vinylidene fluoride/hexafluoropropylene copolymer, polyacrylonitrile, polymethyl methacrylate, etc., but is not necessarily limited thereto and any binder used in the relevant technical field may be used. The binder may be composed of a single or multiple different binders. If the anode active material layer does not include a binder, the anode active material layer may be easily separated from the ceramic coating layer 21 or the anode current collector 21. The content of the binder included in the anode active material layer may be, for example, 1 wt% to 20 wt% based on the total weight of the anode active material layer.

The thickness of the anode active material layer may be, for example, 1 to 200 μm, 5 to 100 μm, or 10 to 50 μm. The thickness of the anode active material layer may be, for example, 1 % to 50 %, 1 % to 30 %, 1 % to 10 %, or 1 % to 5 % of the thickness of the cathode active material layer. If the thickness of the anode active material layer is excessively thin, lithium dendrites formed between the anode active material layer and the anode current collector may collapse the anode active material layer, and it may be difficult to improve the cycle characteristics of the lithium metal battery. If the thickness of the anode active material layer is excessively increased, the energy density of the lithium metal battery adopting the anode 20 may decrease, and it may be difficult to improve the cycle characteristics.

As the thickness of the anode active material layer decreases, for example, the charge capacity of the anode active material layer also decreases. The charge capacity of the anode active material layer may be, for example, 0.1 % to 50 %, 1 % to 30 %, 1 % to 10 %, 1 % to 5 %, or 1 % to 2 % based on the charge capacity. If the charge capacity of the anode active material layer is excessively small, lithium dendrites formed between the anode active material layer and the anode current collector may collapse the anode active material layer, and it may be difficult to improve the cycle characteristics of the lithium metal battery. If the charge capacity of the anode active material layer is excessively increased, the energy density of the lithium metal battery adopting the anode 20 may decrease, and it may be difficult to improve the cycle characteristics. The charge capacity of the cathode active material layer is obtained by multiplying the charge capacity density (mAh/g) of the cathode active material by the mass of the cathode active material in the cathode active material layer. When multiple types of cathode active materials are used, the value of charge capacity density × mass is calculated for each cathode active material, and the sum of these values is the charge capacity of the cathode active material layer. The charge capacity of the anode active material layer is also calculated in the same manner. That is, the charge capacity of the anode active material layer is obtained by multiplying the charge capacity density (mAh/g) of the anode active material by the mass of the anode active material in the anode active material layer. When multiple types of anode active materials are used, the charge capacity density × mass value is calculated for each anode active material, and the sum of these values is the capacity of the anode active material layer. Here, the charge capacity density of the positive and anode materials is the capacity estimated using an all-solid-state half-cell using lithium metal as a counter electrode. By measuring the charge capacity using the all-solid-state half-cell, the charge capacities of the cathode active material layer and the anode active material layer are directly measured. By dividing the measured charge capacity by the mass of each active material, the charge capacity density is obtained. Alternatively, the charge capacities of the cathode active material layer and the anode active material layer may be the initial charge capacities measured during the first cycle of charging.

[Lithium Metal Battery]

A lithium metal battery according to an embodiment includes a cathode, an anode, and a separator disposed between the cathode and the anode. Such a lithium metal battery may provide excellent lifespan characteristics. The lithium metal battery may be, for example, a lithium primary battery, a lithium secondary battery, a lithium-sulfur battery, or a lithium-air battery, but is not limited thereto and may include any lithium metal battery used in the relevant technical field.

The lithium metal battery may be prepared by the following exemplary method, although the method is not necessarily limited thereto and may be adjusted according to required conditions.

(Cathode)

First, a cathode active material composition is prepared by mixing a cathode active material, a conductive material, a binder, and a solvent. The prepared cathode active material composition is directly coated and dried on an aluminum current collector to produce a cathode plate having a cathode active material layer. Alternatively, the cathode active material composition is cast on a separate support, and then a film obtained by peeling from the support is laminated onto the aluminum current collector to produce a cathode plate having a cathode active material layer.

The cathode active material is a lithium-containing metal oxide, and any material commonly used in the art may be used without limitation. For example, one or more complex oxides of lithium and a metal selected from cobalt, manganese, nickel, and combinations thereof may be used. Specific examples include a compound represented by any one of the following chemical formulae: $Li_aA_{1-b}B_bD_2$ (where $0.90 \le a \le 1$, and $0 \le b \le 0.5$); $Li_aE_{1-b}B_bO_{2-c}D_c$ (where $0.90 \le a \le 1$, $0 \le b \le 0.5$, $0 \le c \le 0.05$); $LiE_{2-b}B_bO_{4-c}D_c$ (where $0 \le b \le 0.5$, $0 \le c \le 0.05$); ); $Li_aNi_{1-b-c}Co_bB_cD_\alpha$ (where $0.90 \le a \le 1$, $0 \le b \le 0.5$, $0 \le c \le 0.05$, $0 < \alpha \le 2$); $Li_aNi_{1-b-c}Co_bB_cO_{2-\alpha}F_\alpha$ (where $0.90 \le a \le 1$, $0 \le b \le 0.5$, $0 \le c \le 0.05$, $0 < \alpha < 2$); $Li_aNi_{1-b-c}Co_bB_cO_{2-\alpha}F_2$ (where $0.90 \le a \le 1$, $0 \le b \le 0.5$, $0 \le c \le 0.05$, $0 < \alpha < 2$); $Li_aNi_{1-b-c}Mn_bB_cD_\alpha$ (where $0.90 \le a \le 1$, $0 \le b \le 0.5$, $0 \le c \le 0.05$, $0 < \alpha \le 2$); $Li_aNi_{1-b-c}Mn_bB_cO_{2-\alpha}F_\alpha$ (where $0.90 \le a \le 1$, $0 \le b \le 0.5$, $0 \le c \le 0.05$, $0 < \alpha < 2$); $Li_aNi_{1-b-c}Mn_bB_cO_{2-\alpha}F_2$ (where $0.90 \le a \le 1$, $0 \le b \le 0.5$, $0 \le c \le 0.05$, $0 < \alpha < 2$); $Li_aNi_bE_cG_dO_2$ (where $0.90 \le a \le 1$, $0 \le b \le 0.9$, $0 \le c \le 0.5$, $0.001 \le d \le 0.1$.); $Li_aNi_bCo_cMn_dGeO_2$ (where $0.90 \le a \le 1$, $0 \le b \le 0.9$, $0 \le c \le 0.5$, $0 \le d \le 0.5$, $0.001 \le e \le 0.1$.); $Li_aNiG_bO_2$ (where $0.90 \le a \le 1$, $0.001 \le b \le 0.1$.); $Li_aCoG_bO_2$ (where $0.90 \le a \le 1$, $0.001 \le b \le 0.1$.); $Li_aMnG_bO_2$ (where $0.90 \le a \le 1$, $0.001 \le b \le 0.1$.); $Li_aMn_2G_bO_4$ (where $0.90 \le a \le 1$, $0.001 \le b \le 0.1$.); $QO_2$; $QS_2$; $LiQS_2$; $V_2O_5$; $LiV_2O_5$; $LiIO_2$; $LiNiVO_4$; $Li_{(3-f)}J_2(PO_4)_3$($O \le f \le 2$); $Li_{(3-f)}Fe_2(PO_4)_3$ ($0 \le f \le 2$); and $LiFePO_4$.

In the chemical formulae representing the above-mentioned compounds, A is Ni, Co, Mn, or a combination thereof; B is Al, Ni, Co, Mn, Cr, Fe, Mg, Sr, V, a rare earth element, or a combination thereof; D is O, F, S, P, or a combination thereof; E is Co, Mn, or a combination thereof; F is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J is V, Cr, Mn, Co, Ni, Cu, or a combination thereof. It is also possible to use a compound having a coating layer formed on the surface of the above-described compound, and a mixture of the above-described compound and a compound having a coating layer may also be used. The coating layer added to the surface of the above-described compound includes a coating element compound, for example, an oxide of the coating element, a hydroxide of the coating element, an oxyhydroxide of the coating element, an oxycarbonate of the coating element, or a hydroxycarbonate of the coating element. The compounds forming these coating layers are amorphous or crystalline. The coating elements included in the coating layer include Mg, Al, Co, K, Na, Ca, Si, Ti, V, Sn, Ge, Ga, B, As, Zr or mixtures thereof. The method of forming the coating layer is selected within a range that does not adversely affect the properties of the cathode active material. The coating method may be, for example, spray coating, dipping, or the like. A detailed description of the specific coating methods is omitted herein, as they are well understood by those skilled in the art.

The cathode active material may be, for example: $Li_aNi_xCo_yM_zO_{2-b}A_b$, (where $1.0 \le a \le 1.2$, $0 \le b \le 0.2$, $0.8 \le x < 1$, $0 < y \le 0.3$, $0 < z \le 0.3$, and $x+y+z=1$; M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof; and A is F, S, Cl, Br, or a combination thereof), $LiNi_xCo_yMn_zO_2$ (where $0.8 \le x \le 0.95$, $0 \le y \le 0.2$, $0 < z \le 0.2$, and $x+y+z=1$), $LiNi_xCo_yAl_zO_2$ (where $0.8 \le x \le 0.95$, $0 \le y \le 0.2$, $0 < z \le 0.2$, and $x+y+z=1$), $LiNi_xCo_yMn_zAl_wO_2$ (where $0.8 \le x \le 0.95$, $0 \le y \le 0.2$, $0 < z \le 0.2$, $0 < w \le 0.2$, and $x+y+z+w=1$), $Li_aCo_xM_yO_{2-b}A_b$ (where $1.0 \le a \le 1.2$, $0 \le b \le 0.2$, $0.9 \le x \le 1$, $0 \le y \le 0.1$, and $x+y=1$; M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof; and A is F, S, Cl, Br, or a combination thereof), $Li_aNi_xMn_yM'_zO_{2-b}A_b$ (where $1.0 \le a \le 1.2$, $0 \le b \le 0.2$, $0 < x \le 0.3$, $0.5 \le y < 1$, $0 < z \le 0.3$, and $x+y+z=1$; M' is cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof; and A is F, S, Cl, Br, or a combination thereof), $Li_aM1_xM2_yPO_{4-b}X_b$ (where $0.90 \le a \le 1.1$, $0 \le x \le 0.9$, $0 \le y \le 0.5$, $0.9 < x+y < 1.1$, $0 \le b \le 2$; M1 is chromium (Cr), manganese (Mn), iron (Fe), cobalt (Co), nickel (Ni), copper (Cu), zirconium (Zr), or a combination thereof; M2 is magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or a combination thereof; and X is O, F, S, P, or a combination thereof), $Li_aM3_zPO_4$ (where $0.90 \le a \le 1.1$, $0.9 \le z \le 1.1$; M3 is chromium (Cr), manganese (Mn), iron (Fe), cobalt (Co), nickel (Ni), copper (Cu), zirconium (Zr), or a combination thereof).

As the conductive material, carbon black, fine graphite particles, natural graphite, artificial graphite, acetylene black, Ketjen black, carbon fibers; carbon nanotubes; metal powders, metal fibers, or metal tubes such as copper, nickel, aluminum, and silver; or a conductive polymer such as polyphenylene derivatives is used, but is not limited thereto, and any material used as a conductive material in the art may be used. Alternatively, the cathode may not include a separate conductive material.

As the binder, a vinylidene fluoride/hexafluoropropylene copolymer, polyvinylidene fluoride, polyacrylonitrile,

polymethyl methacrylate, polytetrafluoroethylene (PTFE), a mixture of the above-mentioned polymers, or a styrene-butadiene rubber-based polymer is used, and as the solvent, N-methyl-2-pyrrolidone (NMP), acetone, or water is used. However, the binder and solvent are not limited thereto, and any material used in the relevant technical field may be employed.

It is also possible to form pores inside the electrode plate by further adding a plasticizer or a pore-forming agent to the cathode active material composition.

The content of the cathode active material, conductive material, binder, and solvent used in the cathode is at a level commonly used in lithium batteries. Depending on the application and configuration of the lithium metal battery, one or more of the conductive material, binder, and solvent may be omitted.

The content of the binder included in the cathode may be 0.1 wt% to 10 wt% or 0.1 wt% to 5 wt% based on the total weight of the cathode active material layer. The content of the cathode active material included in the cathode may be 80 wt% to 99 wt%, 90 wt% to 99 wt%, or 95 wt% to 99 wt% based on the total weight of the cathode active material layer.

In an embodiment of the present disclosure, the cathode current collector 11 may include, for example, a base film and a metal layer disposed on one or both surfaces of the base film.

The cathode current collector may be a plate or foil made of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The thickness of the cathode current collector may be, for example, 1 $\mu$m to 100 $\mu$m, 1 $\mu$m to 50 $\mu$m, 5 $\mu$m to 25 $\mu$m, or 10 $\mu$m to 20 $\mu$m.

The cathode current collector may include, for example, a base film and a metal layer disposed on one or both surfaces of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or combinations thereof. The base film may be, for example, an insulator. By including an insulating thermoplastic polymer in the base film, the base film may be softened or melted upon the occurrence of a short circuit, thereby shutting off the operation of the battery and suppressing a rapid increase in current. The metal layer may include, for example, indium (In), copper (Cu), magnesium (Mg), stainless steel, titanium (Ti), iron (Fe), cobalt (Co), nickel (Ni), zinc (Zn), aluminum (Al), germanium (Ge), or alloys thereof. The metal layer may act as an electrochemical fuse and be severed in the event of overcurrent, thereby performing a short-circuit prevention function. The limit current and maximum current may be adjusted by adjusting the thickness of the metal layer. The metal layer may be plated or deposited on the base film. As the thickness of the metal layer decreases, the limit current and/or maximum current of the cathode current collector may decrease, so the stability of the lithium battery in the event of a short circuit may be improved. A lead tab may be further added on the metal layer for external connection. The lead tab may be welded to the metal layer or to the metal layer/base film laminate by ultrasonic welding, laser welding, spot welding, or the like. During welding, the base film and/or the metal layer may melt, and the metal layer may be electrically connected to the lead tab. In order to more firmly weld the metal layer and the lead tab, a metal chip may be further added between the metal layer and the lead tab. The metal chip may be a thin piece made of the same material as the metal of the metal layer. The metal chip may be, for example, a metal foil, a metal mesh, or the like. The metal chip may be, for example, aluminum foil, copper foil, SUS foil, or the like. After placing the metal chip on the metal layer and welding it with the lead tab, the lead tab may be welded to the metal chip/metal layer laminate or to the metal chip/metal layer/base film laminate. During welding, the base film, the metal layer, and/or the metal chip may melt, and the metal layer or the metal chip/metal layer laminate may be electrically connected to the lead tab. A metal chip and/or a lead tab may be further added to a part of the metal layer. The thickness of the base film may be, for example, 1 to 50 $\mu$m, 1.5 to 50 $\mu$m, 1.5 to 40 $\mu$m, or 1 to 30 $\mu$m. By having such a thickness range, the base film may more effectively reduce the weight of the electrode assembly. The melting point of the base film may be, for example, 100 to 300 °C, 100 to 250 °C, or 100 to 200 °C. Because the base film has a melting point in such a range, the base film may melt during the welding process of the lead tab and be easily bonded to the lead tab. To improve the adhesion between the base film and the metal layer, a surface treatment such as corona treatment may be performed on the base film. The thickness of the metal layer may be, for example, 0.01 to 3 $\mu$m, 0.1 to 3 $\mu$m, 0.1 to 2 $\mu$m, or 0.1 to 1 $\mu$m. By having a thickness in such a range, the metal layer may maintain conductivity while ensuring the stability of the electrode assembly. The thickness of the metal chip may be, for example, 2 to 10 $\mu$m, 2 to 7 $\mu$m, or 4 to 6 $\mu$m. By having a thickness in such a range, the metal chip may enable the connection between the metal layer and the lead tab to be performed more easily. By having such a structure in the cathode current collector, the weight of the cathode may be reduced, and as a result, the energy density of the cathode and lithium metal battery may be improved.

(Separator)

Next, a separator to be inserted between the cathode and the anode is prepared.

Any separator that is conventionally used in lithium batteries may be employed. The separator, for example, is one that has low resistance to ion movement of the electrolyte and excellent electrolyte impregnation capability. The separator may be selected, for example, from glass fiber, polyester, Teflon, polyethylene, polypropylene, polytetrafluoroethylene (PTFE), or combinations thereof, and may be in the form of a nonwoven or woven fabric. In lithium-ion batteries, a windable separator such as polyethylene or polypropylene is used, and in lithium-ion polymer batteries, a separator with excellent organic electrolyte impregnation ability is employed.

The separator is prepared by the following exemplary method; however, it is not necessarily limited to such a method and may be adjusted according to required conditions.

First, a separator composition is prepared by mixing a polymer resin, a filler, and a solvent. The separator composition is directly coated and dried on the top of the electrode to form a separator. Alternatively, the separator composition is cast and dried on a support, and then the separator film peeled from the support is laminated on top of the electrode to form the separator.

The polymer used for preparing the separator is not particularly limited, and any polymer usable as a binder for the electrode plate may be used. For example, vinylidene fluoride/hexafluoropropylene copolymer, polyvinylidene fluoride (PVDF), polyacrylonitrile, polymethyl methacrylate, or mixtures thereof may be used.

(Anode)

The anode includes an anode current collector.

In an embodiment of the present disclosure, although not illustrated in the drawings, the anode current collector may include, for example, a base film and a metal layer disposed on one surface or both surfaces of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or combinations thereof. The polymer may be an insulating polymer. By including an insulating thermoplastic polymer in the base film, the base film may soften or melt in the event of a short circuit, thereby interrupting the operation of the battery and suppressing a sudden increase in current. The metal layer may include, for example, copper (Cu), stainless steel, titanium (Ti), iron (Fe), cobalt (Co), nickel (Ni), or alloys thereof. The metal layer may correspond, for example, to the first metal substrate. The metal layer may additionally include a coating layer including a second metal. The anode current collector 21 may further include a metal chip and/or a lead tab. For more specific details regarding the base film, metal layer, metal chip, and lead tab of the anode current collector 21, reference is made to the cathode current collector. By having such a structure, the anode current collector 21 may reduce the weight of the anode and, as a result, improve the energy density of the anode and the lithium battery.

An anode active material layer may be formed on the anode current collector. The anode active material layer may be formed as a plated lithium layer after charging. Alternatively, the anode active material layer may be formed using an anode active material during battery assembly.

The method for forming the anode active material layer using an anode active material may be carried out in the same manner as forming the cathode active material layer, except that the anode active material is used in place of the cathode active material.

The lithium metal battery may further include a thin film on one surface of the anode current collector, the thin film including an element capable of forming an alloy with lithium. The thin film is disposed between the anode current collector and the anode active material layer. The thin film includes, for example, an element capable of forming an alloy with lithium. The element capable of forming an alloy with lithium may be, for example, gold, silver, zinc, tin, indium, silicon, aluminum, bismuth, etc., but is not limited thereto, and may include any element that may form an alloy with lithium as known in the art. The thin film may be composed of one of these metals or an alloy of two or more of these metals. By disposing the thin film on one surface of the anode current collector, for example, the plated shape of the first anode active material layer plated between the thin film and the anode active material layer becomes flatter, and the cycle characteristics of the lithium metal battery may be further improved.

(Separator)

A separator according to an embodiment is used.

The organic electrolyte is prepared, for example, by dissolving a lithium salt in an organic solvent.

Any organic solvent used in the relevant technical field may be used. The organic solvent may include, for example, propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, γ-butyrolactone, dioxolane, 4-methyldioxolane, N,N-dimethylformamide, dimethylacetamide, dimethyl sulfoxide, dioxane, 1,2-dimethoxyethane, sulfolane, dichloroethane, chlorobenzene, nitrobenzene, diethylene glycol, dimethyl ether, or a mixture thereof.

The lithium salt may be any lithium salt used in the relevant technical field. Examples of the lithium salt include $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_y$-

$F_{2y+1}SO_2$) (1≤x≤20, 1≤y≤20), LiCl, LiI, or a mixture thereof. The concentration of the lithium salt may be, for example, from 0.1 M to 5.0 M.

The lithium metal battery according to an embodiment may further include a liquid electrolyte, a solid electrolyte, a gel electrolyte or a combination thereof. The solid electrolyte may be, for example, an oxide-based solid electrolyte, a sulfide-based solid electrolyte, a polymer solid electrolyte, or a combination thereof.

The solid electrolyte may be, for example, an oxide-based solid electrolyte. The oxide-based solid electrolyte may be one or more selected from $Li_{1+x+y}Al_xTi_{2-x}Si_yP_{3-y}O_{12}$ (0<x<2, 0≤y<3), $Li_3PO_4$, $Li_xTi_y(PO_4)_3$(0<x<2, 0<y<3), $Li_xAl_yTi_z(PO_4)_3$ (0<x<2, 0<y<1, 0<z<3), $Li_{1+x+y}(Al, Ga)_x(Ti, Ge)_{2-x}Si_yP_{3-y}O_{12}$(0≤x≤1 0≤y≤1), $Li_xLa_yTiO_3$ (0<x<2, 0<y<3), $Li_2O$, LiOH, $Li_2CO_3$, $LiAlO_2$, $Li_2O-Al_2O_3-SiO_2-P_2O_5-TiO_2-GeO_2$, $Li_{3+x}La_3M_2O_{12}$ (where M = Te, Nb, or Zr, and x is an integer from 1 to 10). The solid electrolyte may be prepared by a sintering method or the like. For example, the oxide-based solid electrolyte may be a garnet-type solid electrolyte selected from $Li_7La_3Zr_2O_{12}$ (LLZO) and $Li_{3+x}La_3Zr_{2-a}M_aO_{12}$ (M-doped LLZO, where M = Ga, W, Nb, Ta, or Al, and x is an integer from 1 to 10).

The sulfide-based solid electrolyte may include, for example, lithium sulfide, silicon sulfide, phosphorus sulfide, boron sulfide, or combinations thereof. The sulfide-based solid electrolyte particles may include $Li_2S$, $P_2S_5$, $SiS_2$, $GeS_2$, $B_2S_3$, or combinations thereof. The sulfide-based solid electrolyte particles may be $Li_2S$ or $P_2S_5$. The sulfide-based solid electrolyte particles are known to have higher lithium-ion conductivity compared to other inorganic compounds. For example, the sulfide-based solid electrolyte may include $Li_2S$ and $P_2S_5$. When the sulfide solid electrolyte material constituting the sulfide-based solid electrolyte includes $Li_2S-P_2S_5$, the molar mixing ratio of $Li_2S$ to $P_2S_S$ may be in the range of about 50:50 to about 90:10. In addition, inorganic solid electrolytes prepared by adding $Li_3PO_4$, halogen, halogen compounds, $Li_{2+2x}Zn_{1-x}GeO_4$ ("LISICON", 0≤x<1), $Li_{3+y}PO_{4-x}N_x$ ("LIPON", 0<x<4, 0<y<3), $Li_{3.25}Ge_{0.25}P_{0.75}S_4$ ("Thio-LISICON"), $Li_2O-Al_2O_3-TiO_2-P_2O_5$ ("LATP") to the inorganic solid electrolyte composed of $Li_2S-P_2S_5$, $SiS_2$, $GeS_2$, $B_2S_3$, or combinations thereof may be used as the sulfide solid electrolyte. Non-limiting examples of the sulfide solid electrolyte materials include: $Li_2S-P_2S_5$; $Li_2S-P_2S_5$-LiX (X = halogen element); $Li_2S-P_2S_5-Li_2O$; $Li_2S-P_2S_5-Li_2O$-LiI; $Li_2S-SiS_2$; $Li_2S-SiS_2$-LiI; $Li_2S-SiS_2$-LiBr; $Li_2S-SiS_2$-LiCl; $Li_2S-SiS_2-B_2S_3$-LiI; $Li_2S-SiS_2-P_2S_5$-LiI; $Li_2S-B_2S_3$; $Li_2S-P_2S_5-Z_nS_n$ (0<m<10, 0<n<10, Z=Ge, Zn or Ga); $Li_2S-GeS_2$; $Li_2S-SiS_2-Li_3PO_4$; and $Li_2S-SiS_2-Li_pMO_q$ (0 < p < 10, 0 < q < 10, M = P, Si, Ge, B, Al, Ga, or In). In this regard, the sulfide-based solid electrolyte material may be prepared by treating the raw material starting material of the sulfide-based solid electrolyte material (e.g., $Li_2S$, $P_2S_5$, etc.) by a melt quenching method, a mechanical milling method, or the like. Additionally, a calcination process can be performed after the above treatment. The sulfide-based solid electrolyte may be amorphous, crystalline, or a mixture of both.

The polymer solid electrolyte may include, for example, a mixture of a lithium salt and a polymer, or a polymer having an ion-conductive functional group. The polymer solid electrolyte may be, for example, a solid polymer electrolyte that is in the solid state at 25 °C and 1 atm. The polymer solid electrolyte may not contain liquid, for example. The polymer solid electrolyte includes a polymer, and the polymer may be, for example, polyethylene oxide (PEO), polyvinylidene fluoride (PVDF), vinylidene fluoride-hexafluoropropylene copolymer (PVDF-HFP), polyethylene oxide (PEO), poly(styrene-b-ethylene oxide) block copolymer (PS-PEO), poly(styrene-butadiene), poly(styreneisoprene-styrene), poly(styrene-b-divinylbenzene) block copolymer, poly(styrene-ethylene oxide-styrene) block copolymer, polystyrenesulfonate (PSS), polyvinyl fluoride (PVF), poly(methyl methacrylate) (PMMA), polyethylene glycol (PEG), polyacrylonitrile (PAN), polytetrafluoroethylene (PTFE), polyethylene dioxythiophene (PEDOT), polypyrrole (PPY), polyacrylonitrile (PAN), polyaniline, polyacetylene, Nafion, Aquivion, Flemion, Gore, Aciplex, Morgane ADP, sulfonated poly(ether ketone) (SPEEK), sulfonated poly(arylene ether ketone sulfone) (SPAEKKS), sulfonated poly(aryl ether ketone) (SPAEK), poly[bis(benzimidazobenzisoquinolinones)] (SPBIBI), poly(styrene sulfonate) (PSS), lithium 9,10-diphenylanthracene-2-sulfonate (DPASLi$^+$), or a combination thereof, but is not limited thereto, and all those used as polymer electrolytes in the relevant technical field are possible. The lithium salt may be any material that may be used as a lithium salt in the relevant technical field. The lithium salt may include, for example, $LiPF_6$, $LiBF_4$, $LiSbF_6$, $LiAsF_6$, $LiClO_4$, $LiCF_3SO_3$, $Li(CF_3SO_2)_2N$, $Li(FSO_2)_2N$, $LiC_4F_9SO_3$, $LiAlO_2$, $LiAlCl_4$, $LiN(C_xF_{2x+1}SO_2)(C_yF_{2y+1}SO_2$ (wherein x and y are each 1 to 20), LiCl, LiI, or a mixture thereof. The polymer included in the polymer solid electrolyte may be a compound including, for example, 10 or more, 20 or more, 50 or more, or 100 or more repeating units. The weight average molecular weight of the polymer included in the polymer solid electrolyte may be, for example, 1,000 Daltons or more, 10,000 Daltons or more, 100,000 Daltons or more, or 1,000,000 Daltons or more.

The gel electrolyte may be, for example, a polymer gel electrolyte. The gel electrolyte may be, for example, in a gel state without including a polymer.

The polymer gel electrolyte may include, for example, a liquid electrolyte and a polymer, or may include an organic solvent and a polymer having an ion-conductive functional group. The polymer gel electrolyte may be, for example, a polymer electrolyte in a gel state at 25 °C and 1 atm. The polymer gel electrolyte may be, for example, in a gel state without including a liquid. The liquid electrolyte used in the polymer gel electrolyte may be, for example, an ionic liquid; a mixture of a lithium salt and an organic solvent; a mixture of a lithium salt and an ionic liquid; a mixture of an ionic liquid and an organic solvent; or a mixture of a lithium salt, an ionic liquid, and an organic solvent. The polymer used in the polymer gel electrolyte may be selected from among the polymers used in the polymer solid electrolyte. The organic solvent may be selected from

among organic solvents used in liquid electrolytes. The lithium salt may be selected from among lithium salts used in polymer solid electrolytes. The ionic liquid refers to a salt or room-temperature molten salt that has a melting point at or below room temperature, is composed solely of ions, and exists in a liquid state at room temperature. The ionic liquid may include one or more selected from compounds including, for example, a) one or more cations selected from ammonium-based, pyrrolidinium-based, pyridinium-based, pyrimidinium-based, imidazolium-based, piperidinium-based, pyrazolium-based, oxazolium-based, pyridazinium-based, phosphonium-based, sulfonium-based, triazolium-based compounds, and mixtures thereof, and b) one or more anions selected from $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, $Cl^-$, $Br^-$, $I^-$, $SO_4^{2-}$, $CF_3SO_3^-$, $(FSO_2)_2N^-$, $(C_2F_5SO_2)_2N^-$, $(C_2F_5SO_2)(CF_3SO_2)N^-$, and $(CF_3SO_2)_2N^-$. The polymer solid electrolyte may form, for example, a polymer gel electrolyte by being impregnated with a liquid electrolyte within a secondary battery. The polymer gel electrolyte may further include inorganic particles. The polymer included in the polymer gel electrolyte may be a compound comprising, for example, 10 or more, 20 or more, 50 or more, or 100 or more repeating units. The weight average molecular weight of the polymer included in the polymer gel electrolyte may be, for example, 500 Daltons or more, 1,000 Daltons or more, 10,000 Daltons or more, 100,000 Daltons or more, or 1,000,000 Daltons or more.

(Lithium Metal Battery)

Referring to FIG. 3, a lithium metal battery 1 according to an embodiment includes a cathode 3, the above-described anode 2, and a separator 4. A gel-type polymer electrolyte (not shown) is disposed between the separator and the cathode. The cathode 3, the anode 2, and the separator 4 are wound or folded to form a battery structure 7. The formed battery structure 7 is accommodated in a battery case 5. An organic electrolyte is injected into the battery case 5 and sealed with a cap assembly 6 to complete the lithium metal battery 1. The battery case 5 is cylindrical, but is not necessarily limited to this shape and may be, for example, prismatic, thin-film, or the like.

Referring to FIG. 3, a lithium metal battery 1 according to an embodiment includes a cathode 3, an anode 2, and a separator 4. The separator 4 is disposed between the cathode 3 and the anode 2, and the cathode 3, the anode 2, and the separator 4 are wound or folded to form a battery structure 7. The formed battery structure 7 is accommodated in a battery case 5. The battery structure 7 may include an electrode tab 8 that serves as an electrical path for drawing current generated in the battery structure to the outside. An organic electrolyte is injected into the battery case 5 and sealed to complete the lithium metal battery 1. The battery case 5 is prismatic, but is not necessarily limited to this shape and may be, for example, cylindrical, thin-film, or the like.

The gel-type polymer electrolyte (not shown) may be disposed between the separator 4 and the cathode 3.

A pouch-type lithium metal battery corresponds to a lithium metal battery in FIG. 4 in which a pouch is used as the battery case. The pouch-type lithium metal battery includes one or more battery structures. A separator is disposed between the cathode and the anode to form the battery structure. A gel-type polymer electrolyte (not shown) may be disposed between the separator and the cathode. The battery structure is impregnated with an electrolyte, accommodated in the pouch, and sealed to complete the pouch-type lithium metal battery. For example, although not shown in the drawings, the above-described cathode, anode, and separator may be simply stacked to form an electrode assembly that is accommodated in the pouch, or the electrode assembly may be wound or folded in a jelly-roll form and accommodated in the pouch. The electrolyte may be an organic electrolyte.

The lithium metal battery of the present disclosure may be, for example, an all-solid-state lithium metal battery.

The lithium metal battery of the present disclosure has excellent discharge capacity and lifespan characteristics and high energy density, and thus may be used, for example, in electric vehicles (EVs). For example, it may be used in hybrid vehicles such as plug-in hybrid electric vehicles (PHEVs). It is also used in fields where a large amount of power storage is required. For example, it may be used in electric bicycles, electric power tools, and the like.

The lithium metal batteries may be stacked to form a battery module, and a plurality of battery modules may form a battery pack. Such a battery pack can be used in any device that requires high capacity and high output. For example, it may be used in laptops, smartphones, electric vehicles, and the like. The battery module may include, for example, a plurality of batteries and a frame holding them. The battery pack may include, for example, a plurality of battery modules and a bus bar connecting them. The battery module and/or battery pack may further include a cooling device. A plurality of battery packs may be controlled by a battery management system. The battery management system includes the battery pack and a battery control device connected to the battery pack.

[Method for Preparing a Lithium Metal Battery]

A lithium metal battery according to an embodiment includes: preparing an anode current collector; preparing a separator; preparing a cathode; laminating the anode current collector, the separator, and the cathode to prepare an assembly; injecting into the assembly a composition for forming a gel-type polymer electrolyte including a monomer for forming a crosslinked polymer and a liquid electrolyte containing an organic solvent and a lithium salt; and crosslinking the

injected composition for forming a gel-type polymer electrolyte to prepare a lithium metal battery including the gel-type polymer electrolyte.

The monomer for forming a crosslinked polymer includes a multifunctional crosslinking agent having three or more functional groups and a (meth)acrylate-based compound having a polyethylene glycol moiety. And the composition for forming the gel-type polymer electrolyte may contain an initiator.

The process of injecting a composition for forming a gel-type polymer electrolyte into the above assembly may be an impregnation process performed under vacuum so that the composition for forming a gel-type polymer electrolyte may sufficiently penetrate into the pores of the porous substrate.

As a method of forming the gel-type polymer electrolyte, a curing method using heat, UV, or high-energy radiation (electron beam, γ-ray) may be used. The curing reaction using heat may be performed at a temperature of 40 to 120 °C, for example, 50 °C to 90 °C, with heat treatment for 30 minutes to 120 minutes.

The heat treatment may vary depending on the type of the multifunctional crosslinking agent having three or more functional groups and the (meth)acrylate-based compound having a polyethylene glycol moiety, but may be performed at a temperature of 40 to 120 °C, for example.

The weight average molecular weight of the multifunctional crosslinking agent having three or more functional groups may be in the range of 200 to 2,000, and may be in the range of 200 to 1,000, for example, in the range of 200 to 800. And the weight average molecular weight of the (meth)acrylate-based compound having a polyethylene glycol moiety is 300 to 600. If the weight average molecular weight of the multifunctional crosslinking agent having three or more functional groups and the (meth)acrylate-based compound having a polyethylene glycol moiety is smaller than the above range, the crosslinking point density in the polymer molecular structure after crosslinking may become too high, which may hinder the free movement of lithium ions. If the molecular weight is larger than the above range, the crosslinking point density in the polymer molecular structure after crosslinking may become too low, which may reduce the electrolyte blocking capability. As used herein, the weight average molecular weight is determined using gel permeation chromatography.

The content of the multifunctional crosslinking agent having three or more functional groups and the (meth) acrylate-based compound having a polyethylene glycol moiety, which is a monomer for forming the crosslinked polymer, is 3 parts to 5 parts by weight based on 100 parts by weight of the composition for forming a gel-type polymer electrolyte. If the total content of the monomer for forming a crosslinked polymer is less than the above range, the degree of crosslinking may become too low during crosslinking, such that the crosslinking characteristics may not be sufficiently exhibited, and the electrolyte absorption ability and mechanical properties may be poor. If the total content exceeds the above range, the internal resistance inside the electrode plate may increase, and this may cause capacity reduction during high-rate charge and discharge.

The composition for forming the gel-type polymer electrolyte may further include a crosslinking agent, a photoinitiator, etc. to assist crosslinking of the crosslinkable monomer. The crosslinking agent, initiator, and the like are not particularly limited as long as they are commonly used in the relevant technical field.

As the initiator, for example, benzoin ethyl ether and the like may be used.

The amount of crosslinking agent, initiator, etc. used may be within the normal range. The content of the initiator may be, for example, 0.1 to 10 parts by weight, 0.1 to 5 parts by weight, or 0.2 to 3 parts by weight, based on 100 parts by weight of the total amount of monomers for forming a crosslinked polymer. By using the gel-type polymer electrolyte formed as described above, it is possible to maintain an ionic conductivity close to that of a liquid electrolyte, and the gel-type polymer electrolyte inside the cathode and anode may serve to prevent leakage of the liquid electrolyte. The electrolyte may be trapped in the polymer matrix of the gel-type polymer electrolyte and retained in the polymer matrix, thereby facilitating smooth movement of lithium ions. In addition, due to the excellent electrochemical characteristics of the polymer, decomposition reactions of the electrolyte may be suppressed in a range of -1 V to 5 V.

The following Examples and Comparative Examples describe the present inventive concept in more detail. However, the Examples are merely illustrative of the present inventive concept, and the scope of the inventive concept is not limited thereto.

<u>Example 1: TMPTA/PEG-DA (8:2) GPE with 3 wt% crosslinked polymer content (hereinafter: 3 wt% crosslinked polymer)</u>

A laminate was prepared by laminating a polyethylene monolayer having a thickness of 20 μm as a separator on top of a copper foil having a thickness of 10 μm, which is a current collector for the anode, and laminating a cathode on the other surface of the separator. To the prepared laminate, the composition for forming a gel-type polymer electrolyte prepared in Preparation Example 1 was injected, and thermal crosslinking was carried out in an oven at 70 °C for 1 hour and 30 minutes, thereby preparing a lithium metal battery including a gel-type polymer electrolyte.

The lithium metal battery had a structure of cathode / gel-type polymer electrolyte (separator) / anode current collector. And the pores of the separator contain a gel-type polymer electrolyte.

The composition for forming a gel-type polymer electrolyte was prepared by mixing a trimethylolpropane

triacrylate (TMPTA) which is a multifunctional crosslinking agent having three or more functional groups, polyethyleneglycol diacrylate (PEG-DA), a liquid electrolyte, and benzoin ethyl ether (Sigma-Aldrich, 240.30 g/mol) as an initiator.

As the liquid electrolyte, a mixture of diethyl carbonate (DEC) and fluoroethylene carbonate (FEC) in a volume ratio of 2:1 was used, to which 0.6 M $LiBF_4$ and 0.6 M lithium difluoro(oxalate)borate (LiDFOB) were added.

The composition for forming a gel-type polymer electrolyte included 2.4 parts by weight of TMPTA, 0.6 parts by weight of PEG-DA, and 95 parts by weight of the liquid electrolyte, based on 100 parts by weight of the total weight of the composition for forming the gel-type polymer electrolyte, and the content of the initiator was 5 parts by weight based on 100 parts by weight of the combined weight of the multifunctional crosslinking agent and PEG-DA.

The mixing weight ratio of TMPTA and PEG-DA is 7:3, and the weight average molecular weight of PEG-DA is about 550. And in the gel-type polymer electrolyte, the content of the cross-linked polymer is 3 wt% and the content of the liquid electrolyte is 97 wt%.

The cathode was prepared as follows.

$Li_{1.04}Ni_{0.88}Co_{0.1}Al_{0.02}O_2$ powder and a carbon conductive material (Super-P; Timcal Ltd.) were uniformly mixed at a weight ratio of 90:5. A polyvinylidene fluoride (PVDF) binder solution was then added to prepare a cathode active material slurry having a weight ratio of active material: carbon conductive material: binder = 90:5:5.

The prepared slurry was coated onto a 15 μm-thick aluminum substrate using a doctor blade, then vacuum-dried at 120 °C. The dried electrode was roll-pressed to form a sheet, thereby producing the cathode.

Example 2: TMPTA/PEG-DA (9:1), 3 wt% crosslinked polymer

A lithium metal battery was prepared in the same manner as in Example 1, except that the weight ratio of TMPTA to PEG-DA was changed to 9:1.

Example 3: TMPTA/PEG-DA (7:3), 3 wt% crosslinked polymer

A lithium metal battery was prepared in the same manner as in Example 1, except that the weight ratio of TMPTA to PEG-DA was changed to 7:3.

Example 4: TMPTA/PEG-DA (3:1), 3 wt% crosslinked polymer

A lithium metal battery was prepared in the same manner as in Example 1, except that the weight ratio of TMPTA to PEG-DA was changed to 3:1.

Example 5: TMPTA/PEG-MA (8:2), 3 wt% cross-linked polymer

A lithium metal battery was prepared in the same manner as in Example 1, except that polyethylene glycol monoacrylate (PEG-MA) was used instead of polyethylene glycol diacrylate in the preparation of the gel-type polymer electrolyte composition.

Example 6: TMPTA/PEG-MA (9:1), 3 wt% cross-linked polymer

A lithium metal battery was prepared in the same manner as in Example 2, except that polyethylene glycol monoacrylate (PEG-MA) was used instead of polyethylene glycol diacrylate in the preparation of the gel-type polymer electrolyte composition.

Example 7: TMPTA/PEG-MA (7:3), 3 wt% cross-linked polymer

A lithium metal battery was prepared in the same manner as in Example 3, except that PEG-MA was used instead of polyethylene glycol diacrylate in the preparation of the gel-type polymer electrolyte composition.

Example 8: TMPTA/PEG-MA (3:1), 3 wt% cross-linked polymer

A lithium metal battery was prepared in the same manner as in Example 4, except that PEG-MA was used instead of polyethylene glycol diacrylate in the preparation of the gel-type polymer electrolyte composition.

Example 9: PETTA/PEG-MA (8:2), 3 wt% crosslinked polymer

A lithium metal battery was prepared in the same manner as in Example 1, except that pentaerythritol

tetramethacrylate (PETTA) was used instead of trimethylolpropane triacrylate (TMPTA) in the preparation of the gel-type polymer electrolyte composition.

Comparative Example 1: TMPTA, 3 wt% cross-linked polymer

A gel-type polymer electrolyte and lithium metal battery were prepared in the same manner as in Example 1, except that the gel-type polymer electrolyte composition was prepared by mixing trimethylolpropane triacrylate (TMPTA), an electrolyte composed of a mixed solvent of ethylene carbonate (EC), dimethyl carbonate (DMC), and ethyl methyl carbonate (EMC) in a weight ratio of 1:1:0.5 with 1.3 M $LiPF_6$ dissolved therein, and benzoin ethyl ether (Sigma-Aldrich, 240.30 g/mol) as an initiator.

Comparative Example 2: Liquid electrolyte (LE)

A lithium metal battery was prepared in the same manner as in Example 1, except that a liquid electrolyte was injected instead of the electrolyte composition prepared in Preparation Example 1, and the thermal crosslinking step was omitted.

As the liquid electrolyte, a mixed solvent of diethyl carbonate (DEC) and fluoroethylene carbonate (FEC) in a 2:1 volume ratio containing 0.6 M $LiBF_4$ and 0.6 M lithium difluoro(oxalate)borate (LiDFOB) was used.

Evaluation Example 1: Lifespan at room temperature (25°C)

The charge/discharge characteristics of the lithium metal batteries of Example 1 and Comparative Example 1-2 were evaluated under the following conditions.

At 25 °C, the cells were charged at a constant current of 0.1 C rate until the voltage reached 4.2 V (vs. Li), followed by constant voltage charging at 4.2 V until the current dropped to 0.05 C rate (cut-off). Discharge was then carried out at a constant current of 0.1 C rate until the voltage dropped to 3.0 V (vs. Li) (formation cycle).

After undergoing the formation cycle, the lithium metal battery was charged at a constant current of 0.2 C rate at 25 °C until the voltage reached 4.2 V (vs. Li), followed by constant voltage charging at 4.2 V until the current decreased to 0.05 C rate (cut-off). Subsequently, the battery was discharged at a constant current of 0.2 C rate until the voltage reached 3.0 V (vs. Li) (1st cycle). This charge/discharge cycle was repeated under the same conditions up to the $300^{th}$ cycle.

A rest period of 10 minutes was applied after each charge/discharge cycle. Portions of the charge/discharge test results at room temperature are shown in Table 1 below, and the capacity retention was defined according to Equation 1.

$$\text{Capacity Retention [\%]} = [\text{Discharge Capacity at } 300^{th} \text{ Cycle / Discharge Capacity at } 1^{st} \text{ Cycle}] \times 100 \qquad \text{Equation 1}$$

[Table 1]

| Example | Electrolyte | Capacity retention (%) @ 0.2 C Discharge per Cycle | | |
|---|---|---|---|---|
| | | 100 cycles | 200 cycles | 300 cycles |
| Example 1 | TMPTA/PEG-DA (8:2) | 71.4 | 78.9 | 66.2 |
| Comparative Example 1 | TMPTA 3% (GPE) | 91.1 | 78.1 | 64.7 |
| Comparative Example 2 | LE | 86.4 | 72.2 | 54.6 |

As shown in Table 1, the lithium metal battery of Comparative Example 2 exhibited a reduction in capacity retention due to side reactions between lithium and the electrolyte caused by dendrite growth. The lithium metal battery of Comparative Example 1 showed improved suppression of capacity degradation from cathode interfacial side reactions and anode dendrite formation due to the presence of a gel-type polymer electrolyte containing a crosslinked polymer of TMPTA. In contrast, the lithium metal battery of Example 1 exhibited enhanced capacity retention compared to both Comparative Examples 1 and 2. Such an improved capacity retention is due to the enhanced long-term lifespan characteristics, which results from the gel-type polymer electrolyte containing crosslinked polymers of TMPTA and PEG-DA physically suppressing dendrite growth.

Evaluation Example 2: Lifespan at room temperature (25 °C)

The charge/discharge characteristics of the lithium metal batteries from Example 4, Example 8, and Comparative

Example 2 were evaluated under the following conditions.

At 25 °C, constant current charging was performed at a current of 0.1 C rate until the voltage reached 4.2 V (vs. Li), followed by constant voltage charging at 4.2 V until the current dropped to a cut-off level of 0.05 C rate. Then, constant current discharge at 0.1 C rate was performed until the voltage dropped to 3.0 V (vs. Li) (formation cycle).

After the formation cycle, constant current charging was carried out at 0.2 C rate until the voltage reached 4.2 V (vs. Li), followed by constant voltage charging at 4.2 V until the current dropped to a cut-off level of 0.05 C rate. Then, the cell was discharged at 0.2 C rate until the voltage reached 3.0 V (vs. Li) (1st cycle). This charge/discharge cycle was repeated under the same conditions up to the $100^{th}$ cycle.

A rest period of 10 minutes was applied after each charge/discharge cycle in all cycles. The results of the room-temperature charge/discharge tests are shown in Table 2 below.

[Table 2]

| Example | Electrolyte | Capacity retention (%) %@100cy (0.2C) |
|---|---|---|
| Example 4 | TMPTA/PEG-DA(3:1) | 98.7 |
| Example 8 | TMPTA/PEG-MA(3:1) | 97.5 |
| Comparative Example 2 | LE | 95.4 |

As shown in FIG. 3, the lithium metal battery of Comparative Example 2 showed reduced capacity retention due to side reactions between lithium and the electrolyte caused by dendrite growth. In contrast, the lithium metal batteries of Examples 4 and 8 exhibited improved capacity retention compared to Comparative Example 2. Notably, the lithium metal battery of Example 4 demonstrated superior capacity retention and capacity characteristics compared to Example 8. This is because the increased degree of crosslinking due to a higher number of reactive functional groups that crosslink with the trifunctional crosslinking agent enhanced stability, and the gel-type polymer electrolyte physically suppressed dendrite growth, thereby improving long-term lifespan characteristics.

Evaluation Example 3: High-rate characteristics

The lithium metal batteries prepared in Examples 3 and 6 and Comparative Example 1 were charged at 25 °C with a constant current at a rate of 0.1 C until the voltage reached 4.35 V (vs. Li), followed by constant voltage charging at 4.35 V with a cut-off current of 0.05 C. Subsequently, the cells were discharged at a constant current of 0.1 C until the voltage reached 2.8 V (vs. Li) ($1^{st}$ cycle, formation cycle).

After the 1st cycle, the lithium metal cell was charged at a constant current of 0.33 C at 25 °C until the voltage reached 4.35 V (vs. Li), and then maintained at 4.35 V in a constant voltage mode until cut-off at a current of 0.05 C. Subsequently, the battery was discharged at a constant current of 0.2C rate until the voltage reached 2.8 V (vs. Li) during discharge ($2^{nd}$ cycle).

The $2^{nd}$ cycle was repeated under the same conditions up to the $7^{th}$ cycle.

After completing the $7^{th}$ cycle, the lithium metal battery was charged at a constant current of 0.33 C at 25 °C until the voltage reached 4.35 V (vs. Li), and then held at 4.35 V under a constant voltage mode until the current dropped to 0.05 C (cut-off). Subsequently, the battery was discharged at a constant current of 0.5 C until the voltage reached 2.8 V (vs. Li) ($8^{th}$ cycle).

The 8th cycle was repeated under the same conditions up to the $17^{th}$ cycle.

After completing the $17^{th}$ cycle, the lithium metal battery was charged at a constant current of 0.33 C at 25 °C until the voltage reached 4.35 V (vs. Li), and then held at 4.35 V under a constant voltage mode until the current dropped to 0.05 C (cut-off). Subsequently, the battery was discharged at a constant current of 1 C until the voltage reached 2.8 V (vs. Li) (18th cycle).

The $18^{th}$ cycle was repeated under the same conditions up to the $25^{th}$ cycle.

After completing the 25th cycle, the lithium metal battery was charged at a constant current of 0.33 C at 25 °C until the voltage reached 4.35 V (vs. Li), and then held at 4.35 V under constant voltage mode until the current dropped to 0.05 C (cut-off). Subsequently, the cell was discharged at a constant current of 2 C until the voltage reached 2.8 V (vs. Li) ($26^{th}$ cycle).

A 10-minute rest period was applied after each charge/discharge cycle.

A portion of the charge/discharge test results is shown in Table 3 below. The high-rate performance was defined according to Equation 2.

High-rate performance [%] = [Discharge capacity at 26th cycle (2 C rate) /Discharge capacity at 1st cycle (0.1 C rate)] $\times$ 100     Equation 2

[Table 3]

| Example | Electrolyte | High rate characteristics (%) |
|---|---|---|
| Example 3 | TMPTA/PEG-DA(7:3) | 40.2 |
| Example 6 | TMPTA/PEG-MA(9:1) | 35.1 |
| Comparative Example 1 | TMPTA 3% | 31.7 |

Referring to Table 3, it was confirmed that the performance of bifunctional PEG-DA is superior to that of monofunctional PEG-MA. In addition, the lithium metal batteries of Examples 3 and 6 showed improved performance compared to that of Comparative Example 1. Specifically, the lithium metal battery of Example 3, which includes a gel-type polymer electrolyte including a crosslinked polymer formed by the reaction of TMPTA and PEG-DA, exhibited better high-rate characteristics than the lithium metal battery of Example 6, which includes a gel-type polymer electrolyte including a crosslinked polymer formed by the reaction of TMPTA and PEG-MA. This result is attributed to the fact that PEG-DA increases the crosslinking density of TMPTA, thereby enhancing oxidative stability and mechanical strength, which in turn improves the overall stability of the system. Additionally, the gel-type polymer electrolyte physically suppresses dendrite growth, leading to improved long-term lifespan characteristics.

Evaluation Example 4: Ionic Conductivity

In lithium metal batteries fabricated according to Examples 1 to 3 and Comparative Example 1, the ionic conductivity of the gel-type polymer electrolyte was measured using the AC impedance method. In this method, the interfacial resistance and bulk resistance of the cell were monitored over time by observing changes in impedance. The ionic conductivity of each gel-type polymer electrolyte was calculated using Equation 3 below, and the results are shown in Table 4.

Equation 3

$$\sigma = 1/Rb \times t/A$$

In Equation 3, Rb represents the resistance of the electrolyte, t is the thickness of the electrolyte film, and A is the area of the electrolyte film.

[Table 4]

| Example | Electrolyte | Ionic Conductivity (S/cm) |
|---|---|---|
| Example 1 | TMPTA/PE-DA(8:2) | 0.32 |
| Example 2 | TMPTA/PE-DA(9:1) | 0.39 |
| Example 3 | TMPTA/PE-DA(7:3) | 0.36 |
| Comparative Example 1 | TMPTA 3% | 0.18 |

Referring to Table 4, it was found that the gel-type polymer electrolytes of Examples 1 to 3 exhibited superior ionic conductivity compared to the gel polymer electrolyte of Comparative Example 1.

However, a linear increase in the ionic conductivity of the gel polymer electrolyte with increasing PEG-DA content was not observed, and the mixed weight ratio of TMPTMA to PEG-DA at 9:1 exhibited the most excellent ionic conductivity characteristics.

Evaluation Example 5: Charge/Discharge Characteristics

In the lithium metal batteries of Example 1-3 and Comparative Example 1, the charge/discharge characteristics of the lithium metal batteries were evaluated under the following conditions.

At 25 °C, the batteries were charged at a constant current of 0.1 C rate until the voltage reached 4.2 V (vs. Li), followed by a constant voltage charging mode at 4.2 V with a cut-off current of 0.05 C rate. Subsequently, the cell was discharged at a constant current of 0.1 C rate until the voltage dropped to 3.0 V (vs. Li) (formation cycle).

After the formation cycle, the lithium metal battery was charged at a constant current of 0.2 C rate at 25 °C until the voltage reached 4.2 V (vs. Li), followed by constant voltage charging at 4.2 V with a cut-off current of 0.05 C rate. Then, it was discharged at a constant current of 0.2 C rate until the voltage dropped to 3.0 V (vs. Li) ($1^{st}$ cycle). These cycles were repeated under the same conditions until the $100^{th}$ cycle.

A 10-minute rest period was provided after each charge/discharge cycle throughout the test. Part of the charge/discharge test results at room temperature are shown in Table 5 below.

[Table 5]

| Example | Mixing weight ratio of TMPTA and PEG-DA | Capacity retention rate (%)@100cy |
|---|---|---|
| Example 1 | 8:2 | 91.1 |
| Example 2 | 9:1 | 90.7 |
| Example 3 | 7:3 | 90.2 |
| Comparative Example 1 | 10:0 | 88.8 |

As shown in Table 5, the lithium metal batteries of Examples 1 to 3 exhibited improved capacity retention compared to the lithium metal battery of Comparative Example 1. Among them, the lithium metal battery of Example 1, containing 20% by weight of PEG-DA, showed the highest capacity retention. This improved capacity retention is attributed to the fact that the gel-type polymer electrolyte including the crosslinked polymer of TMPTA and PEG-DA physically suppresses dendrite growth, thereby enhancing long-term lifespan characteristics.

While the above description sets forth an exemplary embodiment in detail with reference to the accompanying drawings, the present inventive concept is not limited thereto. It will be apparent to those skilled in the art that various modifications and alterations may be made within the scope of the technical ideas set forth in the claims, and such variations also fall within the technical scope of the present inventive concept.

## Claims

1. A lithium metal battery comprising:

   a cathode;
   an anode current collector; and
   an electrolyte layer disposed between the cathode and the anode current collector,
   wherein the electrolyte layer comprises a gel-type polymer electrolyte, the gel-type polymer electrolyte comprises a crosslinked polymer and a liquid electrolyte containing an organic solvent and a lithium salt, and
   the crosslinked polymer comprises a reaction product of a multifunctional crosslinking agent having three or more functional groups and a (meth)acrylate-based compound having a polyethylene glycol moiety.

2. The lithium metal battery of claim 1, wherein the multifunctional crosslinking agent having three or more functional groups is trimethylolpropane triacrylate, trimethylolpropane trimethacrylate, trimethylolpropane ethoxylate triacrylate, trimethylolpropane propoxylate triacrylate, ditrimethylolpropane tetraacrylate, pentaerythritol triacrylate, pentaerythritol tetraacrylate, pentaerythritol ethoxylate tetraacrylate, dipentaerythritol pentaacrylate, dipentaerythritol hexaacrylate (DPHA), tris(2-hydroxyethyl)isocyanurate triacrylate (THEICTA), propoxylated glyceryl triacrylate, or a combination thereof.

3. The lithium metal battery of claim 1, wherein the (meth)acrylate-based compound having a polyethylene glycol moiety is polyethylene glycol diacrylate, polyethylene glycol dimethacrylate, triethylene glycol diacrylate (TEGDA), triethylene glycol dimethacrylate (TEGDMA), tetraethylene glycol diacrylate (TTEGDA), glycidyl methacrylate, polyethylene glycol diacrylate (PEGDA), polyethylene glycol dimethacrylate (PEGDMA), polypropylene glycol diacrylate (PPGDA), dipropylene glycol diacrylate (DPGDA), tripropylene glycol diacrylate (TPGDA), or a combination thereof.

4. The lithium metal battery of claim 1, wherein a mixing weight ratio of the multifunctional crosslinking agent having three or more functional groups to the (meth)acrylate-based compound having a polyethylene glycol moiety is 9:1 to 2:1.

5. The lithium metal battery of claim 1, comprising an anode active material layer, a protective layer or a combination thereof, between the electrolyte layer and the anode current collector.

6. The lithium metal battery of claim 1, wherein the electrolyte layer further comprises a separator, and the separator comprises a porous substrate.

7. The lithium metal battery of claim 1, wherein the lithium salt comprises a first lithium salt and a second lithium salt,

the first lithium salt and the second lithium salt each independently comprise a fluorine-containing borate-based lithium salt,
the fluorine-containing borate-based lithium salt comprises $LiBF_4$, $LiBF_3(C_2F_5)$, a compound represented by any one of Formulae 1 to 12, or a combination thereof, and a content of each of the first lithium salt and the second lithium salt is more than 0 and less than or equal to 1.2 M, and
a content ratio of the first lithium salt to the second lithium salt is 1:9 to 9:1.

<Formula 1>

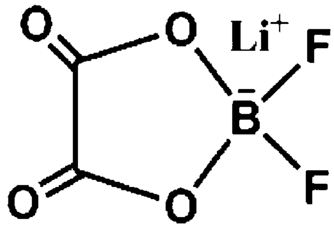

<Formula 2>

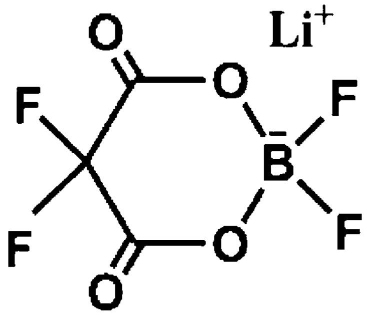

<Formula 3>

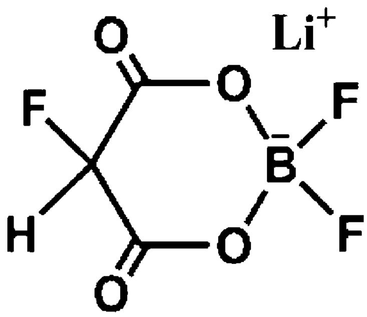

<Formula 4>

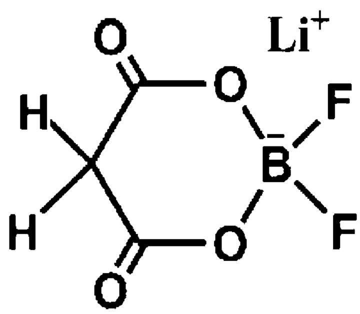

<Formula 5>

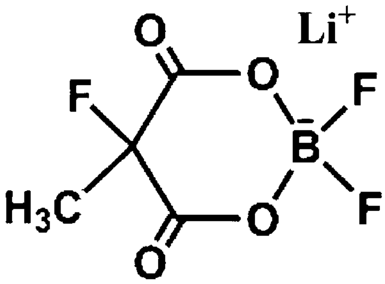

<Formula 6>

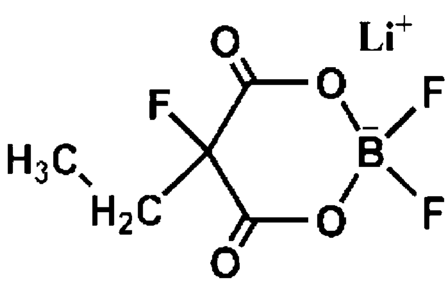

<Formula 7>

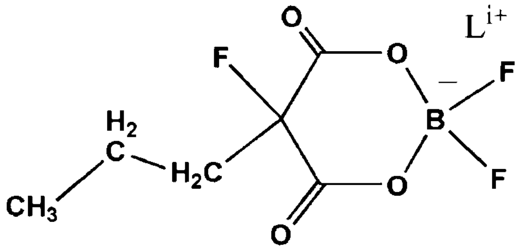

<Formula 8>

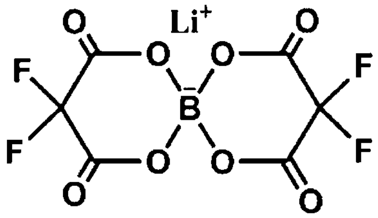

<Formula 9>

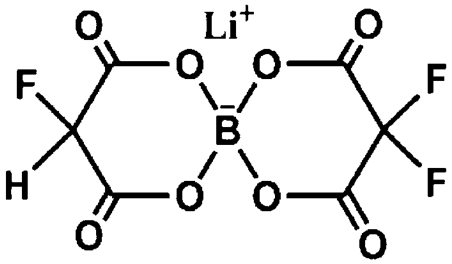

<Formula 10>

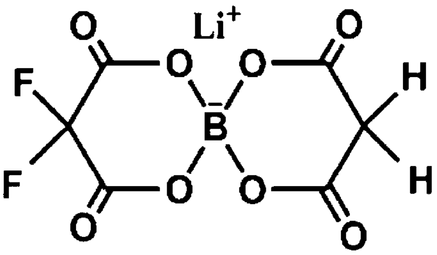

<Formula 11>

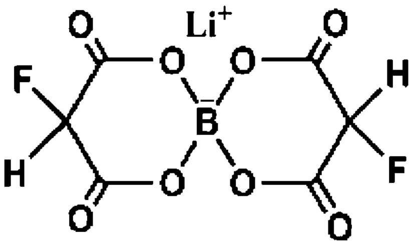

<Formula 12>

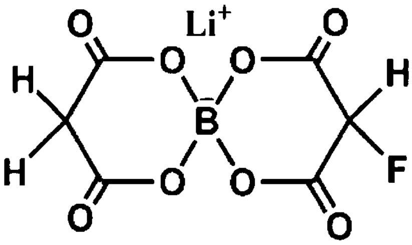

**8.** The lithium metal battery of claim 1, wherein the organic solvent includes a first organic solvent and a second organic solvent,

the first organic solvent comprises a linear carbonate compound,
the second organic solvent comprises a cyclic carbonate compound substituted with a substituent, and
the substituent comprises a halogen, a cyano group (CN), a nitro group ($NO_2$), or a combination thereof.

**9.** The lithium metal battery of claim 8, wherein the first organic solvent comprises diethyl carbonate (DEC), dimethyl carbonate (DMC), ethyl methyl carbonate (EMC), methyl propyl carbonate, ethyl propyl carbonate, dipropyl carbonate, or a combination thereof, and
the second organic solvent comprises: vinylene carbonate substituted with one or more substituents selected from a halogen, a cyano group (CN), and a nitro group ($NO_2$); vinylethylene carbonate substituted with one or more substituents selected from a halogen, a cyano group (CN), and a nitro group ($NO_2$); fluoroethylene carbonate (FEC); fluoroethylene carbonate substituted with one or more substituents selected from a halogen, a cyano group (CN), and a nitro group ($NO_2$); or a combination thereof.

**10.** The lithium metal battery of claim 1, wherein the electrolyte layer further comprises a separator, and
the lithium metal battery comprises: an anode current collector; a separator disposed on the anode current collector; a gel-type polymer electrolyte disposed on the separator; and a cathode disposed on the gel-type polymer electrolyte.

**11.** The lithium metal battery of claim 1, further comprising a lithium metal layer between the anode current collector and the electrolyte layer, and wherein, in XPS analysis of a surface of the lithium metal layer, an intensity of a fluorine peak is greater than an intensity of an oxygen peak.

**12.** The lithium metal battery of claim 1, wherein the anode current collector comprises copper (Cu), nickel (Ni), nickel-coated copper, stainless steel (SUS), iron (Fe), cobalt (Co), or an alloy thereof.

**13.** The lithium metal battery of claim 1, wherein the cathode comprises a cathode current collector and a cathode active material layer,

wherein one or both of the cathode current collector and the anode current collector comprises a base film and a metal layer disposed on one or both sides of the base film,
the base film comprises a polymer, and the polymer comprises polyethylene terephthalate (PET), polyethylene (PE), polypropylene (PP), polybutylene terephthalate (PBT), polyimide (PI), or a combination thereof, and
the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

**14.** The lithium metal battery of claim 1, wherein the gel-type polymer electrolyte has an ionic conductivity of 0.19 to 0.5 S/cm.

**15.** The lithium metal battery of claim 1, wherein the gel-type polymer electrolyte is present in pores of the separator.

**16.** The lithium metal battery of claim 1, wherein the lithium metal battery further comprises an electrolyte, and
the electrolyte comprises a liquid electrolyte, a solid electrolyte, a gel electrolyte, or a combination thereof.

**17.** The lithium metal battery of claim 16, wherein the solid electrolyte comprises an oxide-based solid electrolyte, a sulfide-based solid electrolyte, a polymer solid electrolyte, or a combination thereof, and the polymer solid electrolyte comprises a polymer gel electrolyte.

**18.** A method of preparing the lithium metal battery of claim 1, the method comprising:

preparing an anode current collector;
preparing an electrolyte layer;
preparing a cathode;
stacking the anode current collector, the electrolyte layer, and the cathode to prepare an assembly;
injecting into the assembly a composition for forming a gel-type polymer electrolyte, the composition comprising a multifunctional crosslinking agent having three or more functional groups, a (meth)acrylate-based compound having a polyethylene glycol moiety, and a liquid electrolyte containing an organic solvent and a lithium salt; and
crosslinking the injected composition for forming a gel-type polymer electrolyte to prepare a lithium metal battery comprising a gel-type polymer electrolyte.

**19.** The method of claim 18,
wherein the electrolyte layer comprises a separator.

**20.** The method of claim 18,
wherein the crosslinking is performed by heat treatment at 40 °C to 120 °C.

FIG. 1

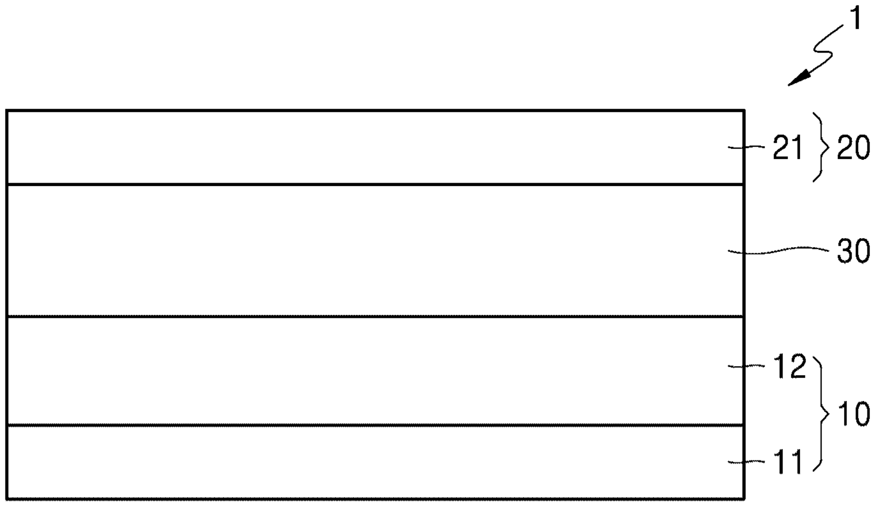


FIG. 2

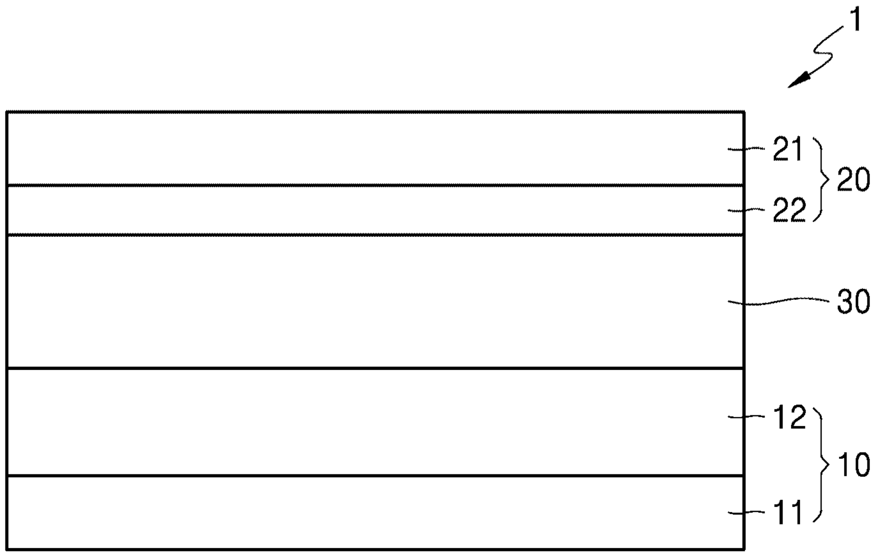

FIG. 3

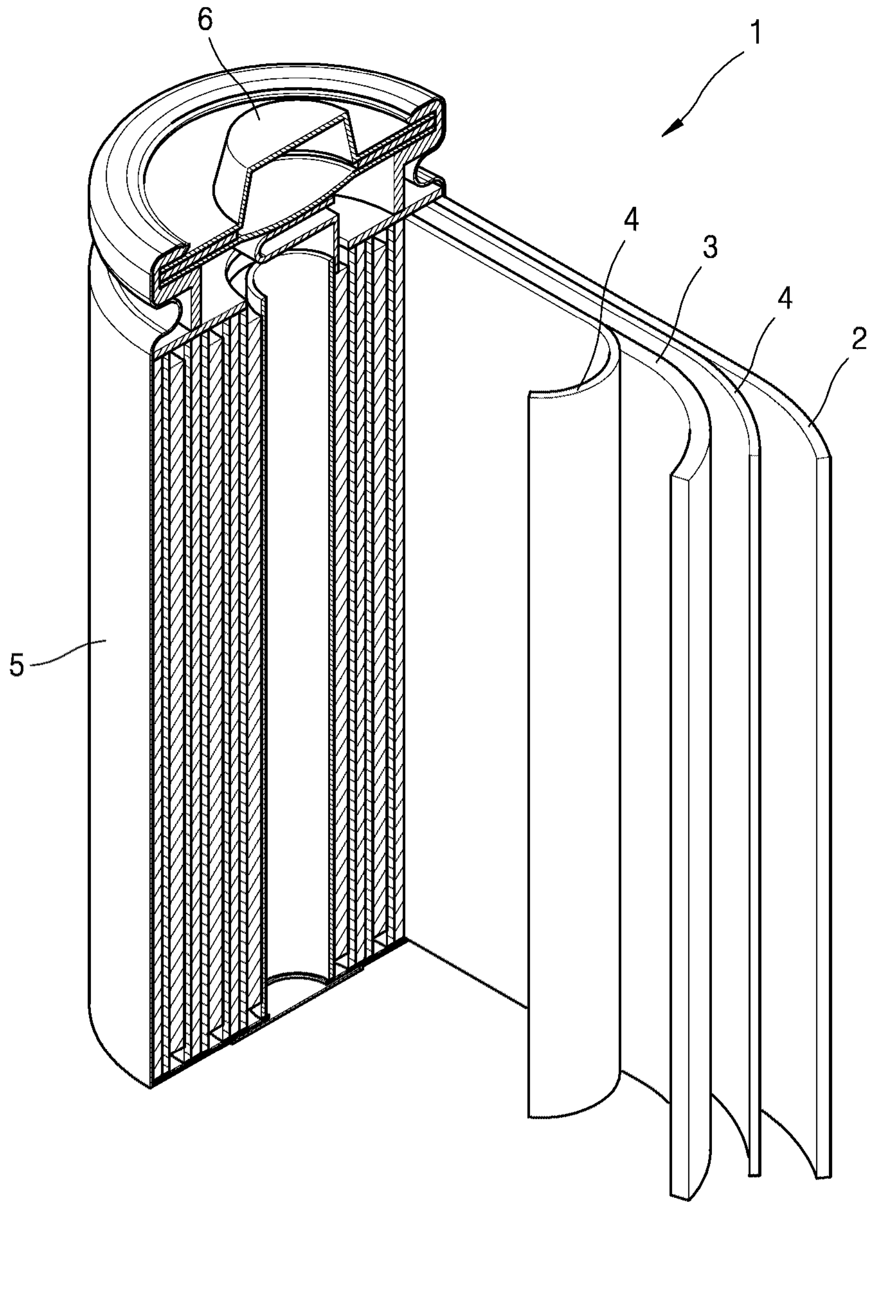

FIG. 4

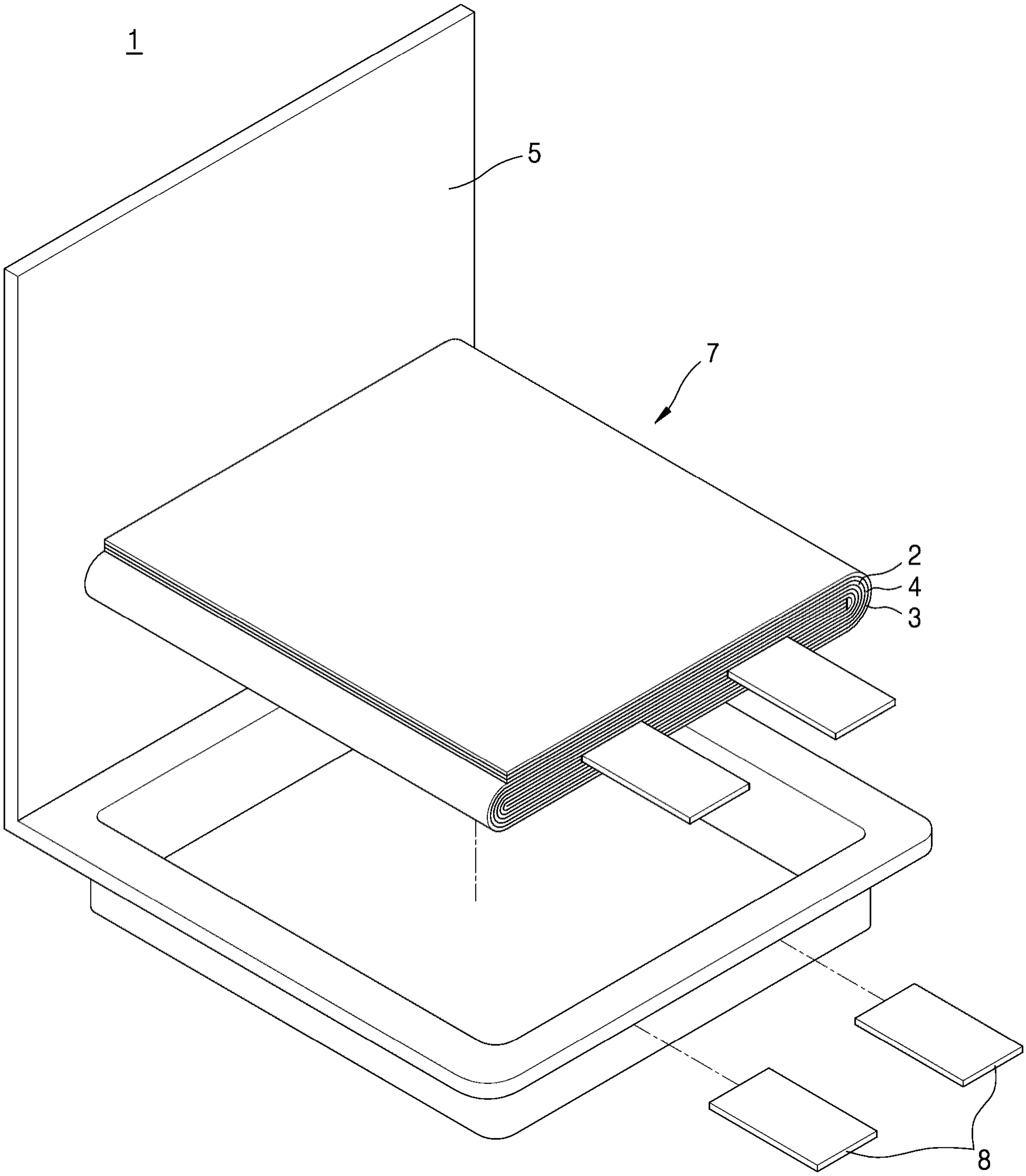

FIG. 5

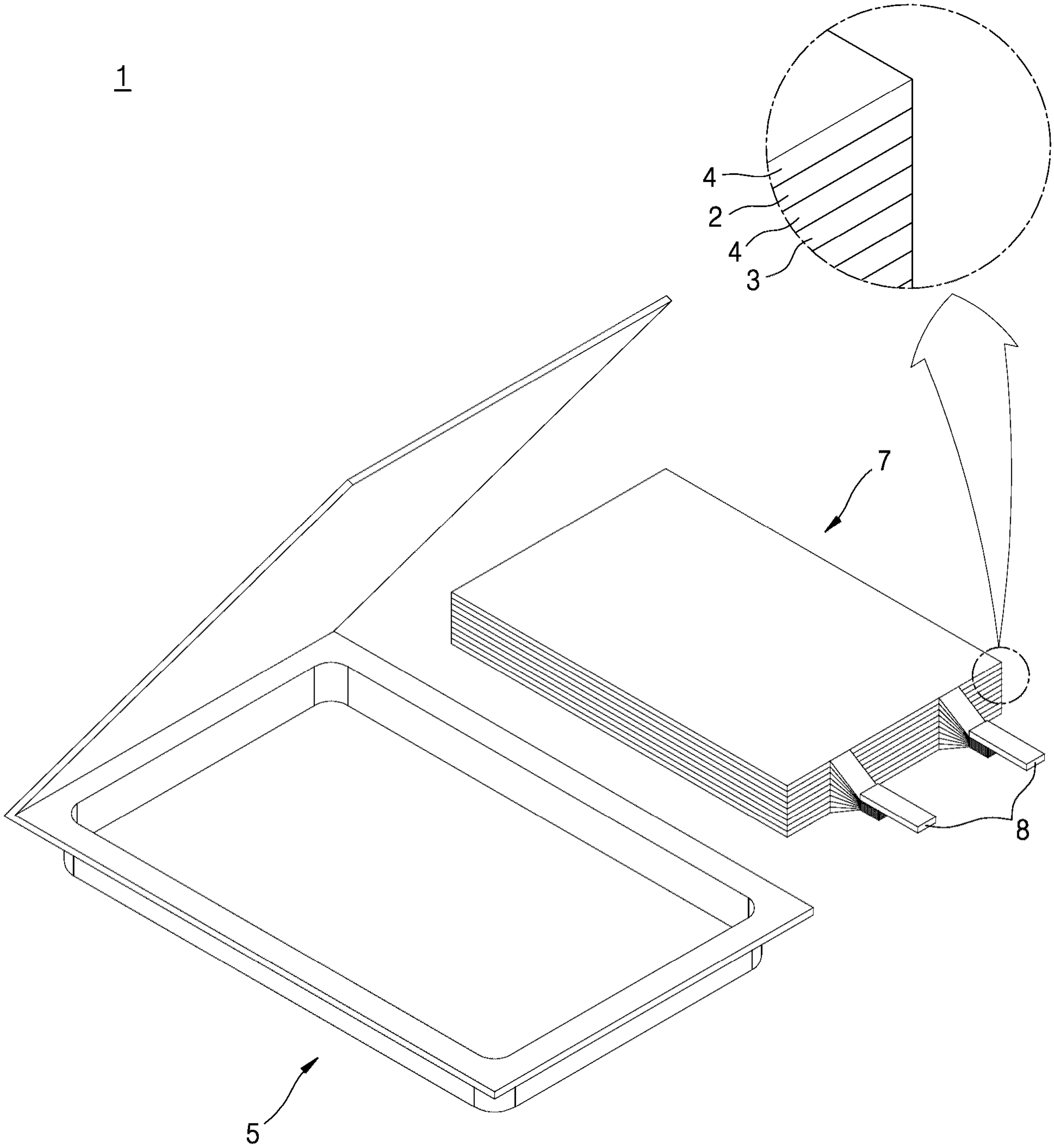

**INTERNATIONAL SEARCH REPORT**

International application No.
**PCT/KR2024/002357**

**A. CLASSIFICATION OF SUBJECT MATTER**

**H01M 10/0565**(2010.01)i; **H01M 4/133**(2010.01)i; **H01M 4/134**(2010.01)i; **H01M 10/052**(2010.01)i

According to International Patent Classification (IPC) or to both national classification and IPC

**B. FIELDS SEARCHED**

Minimum documentation searched (classification system followed by classification symbols)

H01M 10/0565(2010.01); H01M 10/0525(2010.01); H01M 12/08(2006.01); H01M 50/463(2021.01); H01M 50/531(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (registry, caplus) & keywords: 겔형 고분자 전해질(gel polymer electrolyte), 가교 고분자 (cross-linked polymer), 다관능성 가교제(multifunctional crosslinking agent), 리튬염(lithium salt), 유기용매(organic solvent)

**C. DOCUMENTS CONSIDERED TO BE RELEVANT**

| Category* | Citation of document, with indication, where appropriate, of the relevant passages | Relevant to claim No. |
|---|---|---|
| Y | FAN, W. et al. A dual-salt gel polymer electrolyte with 3D cross-linked polymer network for dendrite-free lithium metal batteries. Advanced science. 2018, vol. 5, article no. 1800559, pp. 1-9.<br>See abstract; pages 2 and 6; and figures 1-2. | 1-20 |
| Y | WO 2023-002015 A1 (REPSOL, S.A.) 26 January 2023 (2023-01-26)<br>See claims 1-15; and pages 6-7 and 9. | 1-20 |
| Y | ZYGADŁO-MONIKOWSKA, E. et al. Mixture of LiBF4 and lithium difluoro(oxalato)borate for application as a new electrolyte for lithium-ion batteries. Journal of power sources. 2010, vol. 195, pp. 6202-6206.<br>See abstract; and page 6205. | 7 |
| Y | KR 10-2021-0099765 A (UBATT INC.) 13 August 2021 (2021-08-13)<br>See claims 1 and 6; paragraphs [0120], [0128]-[0134] and [0250]-[0251]; and figure 1. | 11,13 |
| A | KR 10-2019-0019026 A (POSCO) 26 February 2019 (2019-02-26)<br>See entire document. | 1-20 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **29 May 2024** | **31 May 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/002357**

| Patent document cited in search report | Publication date (day/month/year) | Patent family member(s) | Publication date (day/month/year) |
|---|---|---|---|
| WO 2023-002015 A1 | 26 January 2023 | KR 10-2024-0035400 A | 15 March 2024 |
| KR 10-2021-0099765 A | 13 August 2021 | None | |
| KR 10-2019-0019026 A | 26 February 2019 | KR 10-2170434 B1 | 28 October 2020 |

Form PCT/ISA/210 (patent family annex) (July 2022)